# EUROPÄISCHE PATENTSCHRIFT

(11) **EP 2 997 106 B1**
(45) Veröffentlichungstag und Bekanntmachung des Hinweises auf die Patenterteilung: **06.03.2019**
(21) Anmeldenummer: 14805585.8
(22) Anmeldetag: 28.11.2014
(51) Int. Cl.: C09J 5/06, C09J 11/06

(54) **VERFAHREN ZUM AUSHÄRTEN EINES KLEBSTOFFS MITTELS MIKROWELLENBESTRAHLUNG**
METHOD FOR CURING AN ADHESIVE BY MICROWAVE-IRRADIATION
PROCÉDÉ DE DURCISSEMENT D'UN ADHÉSIF AU MOYEN D'UNE IRRADIATION AUX MICRO-ONDES

(30) Priorität: 29.11.2013 EP 13195017
(43) Veröffentlichungstag der Anmeldung: 23.03.2016
(73) Patentinhaber: proionic GmbH, 8074 Grambach (AT)
(72) Erfinder: WUTTI, Robert, A-8010 Graz (AT); KALB, Roland, A-8261 Sinabelkirchen (AT)
(74) Vertreter: Schwarz & Partner Patentanwälte OG
(86) Internationale Anmeldenummer: PCT/EP2014/075968
(87) Internationale Veröffentlichungsnummer: WO 2015/079028

(56) Entgegenhaltungen:
- WO-A2-2008/071768
- DATABASE WPI Week 200968 Thomson Scientific, London, GB; AN 2009-P40985 XP002724247, & JP 2009 227949 A (SANYO CHEM IND LTD) 8. Oktober 2009 (2009-10-08)
- DATABASE WPI Week 200953 Thomson Scientific, London, GB; AN 2009-L98142 XP002724248, & JP 2009 167362 A (SANYO CHEM IND LTD) 30. Juli 2009 (2009-07-30)
- DATABASE WPI Week 200958 Thomson Scientific, London, GB; AN 2009-L30538 XP002724249, & JP 2009 149828 A (SANYO CHEM IND LTD) 9. Juli 2009 (2009-07-09)

## Beschreibung

Die vorliegende Erfindung betrifft ein Verfahren zum Aushärten eines Klebstoffs mittels Mikrowellen.

Der weltweite Markt für Klebstoffe, Dichtstoffe und Oberflächentechnik bewegt sich im Bereich von ca. 50 Mrd. US$ pro Jahr und wird durch die Entwicklung der Schwellenländer weiter ansteigen (Quelle: Henkel AG Co. KgaA 2010). Viele Mio. Tonnen Klebstoffe werden heutzutage jährlich in unzähligen Anwendungen durch Industrie, Bau, Handwerk und durch Endkonsumenten eingesetzt, z.B. zum Buchbinden, für Verpackungs- und Beschriftungszwecke, Zigaretten, Hygieneartikel, zum Fügen von Werkstoffen wie Holz, Kunststoff, Elastomeren, Gummi, Metall, Glas, Textil und darauf basierenden Composites, zum Herstellen von Schuhen, zum Verkleben von Teppichen und Tapeten, als Zusätze in Zement und Beton, in Fertigteilhäusern, in der Fertigung von Automobilen, Flugzeugen und Schiffen, in der Herstellung von elektronischen Bauteilen und Leiterplatinen, Handys, Laptops, Bildschirmen und Computern, in der Medizin, im Haushalt.
Die verwendeten Klebstofftypen sind z.B. in der Norm DIN EN 923 definiert und umfassen unter anderem: physikalisch abbindende Klebstoffe, z.B. Schmelzklebstoffe, lösemittelhaltige Nassklebstoffe, Kontaktklebstoffe, Dispersionsklebstoffe, wasserbasierte Klebstoffe und Plastisole, chemisch härtende Ein- oder Zweikomponenten-Klebstoffe (Reaktivklebstoffe), wie Polymerisationsklebstoffe, z.B. Cyanacrylat- und Methylmethacrylat-Klebstoffe, anaerob härtende Klebstoffe, ungesättigte Polyesterharze, strahlenhärtende Klebstoffe, Polykondensationsklebstoffe, z.B. Phenol-Formaldehydharz-Klebstoffe, quervernetzte Siliconpolymere, Silan-vernetzende Polymerklebstoffe, Polyimidklebstoffe, Polysulfidklebstoffe, Polyadditionsklebstoffe, z.B. Epoxidharz-Klebstoffe, Polyurethan-Klebstoffe, Silikone, vulkanisierende Klebstoffe und Klebstoffe ohne Verfestigungsmechanismus, z.B. Haftklebstoffe.

Die Begriffe "Verwendung" oder "Anwendung" von Klebstoffen umfaßt im Sinne dieses Patentes nicht nur das Fügen und Verkleben von Werkstoffteilen zum Zwecke der mechanischen Verbindung, sondern auch die Anwendung als Dichtstoff, Haftvermittler, zur Versiegelung und Beschichtung von Oberflächen und Grenzflächen jeder Art.

Bei der Anwendung aller dieser Klebstofftypen spielt neben der Art und Beschaffenheit der zu klebenden Teile und der sie umgebenden Atmosphäre (Feuchtigkeit und Strömungsgeschwindigkeit der umgebenden Luft, Einwirkung von Licht und Sauerstoff) sowie des Anpressdruckes insbesondere die einwirkende Temperatur und die durch die Temperatur beeinflußte Dauer und Qualität des Klebevorgangs eine ganz entscheidende Rolle. Als Beispiele werden angeführt:
- bei Schmelzklebstoffen wird der Klebstoff zuerst bei einer bestimmten Temperatur verflüssigt,
- bei lösemittelhaltigen Naß- oder Dispersionsklebstoffen bestimmt die Temperatur die Verdampfungsrate des Lösungsmittels,
- bei Plastisolen verwandelt sich die Klebstoff-Dispersion bei einer bestimmten Temperatur in das eigentliche Klebstoffgel und wird der Klebe-Promotor aktiviert,
- bei Reaktivklebstoffen (Klebstoffen mit chemischem Vernetzungs- bzw. Härtemechanismus) mit einer oder zwei Komponenten sowie bei vulkanisierenden Klebstoffen wirkt sich die Temperatur entscheiden auf den Startzeitpunkt der Polymerisation und die zu erreichende Festigkeit und Qualität und die Dauer des Klebevorgangs aus, usw..

Aus der EP 1 519 988 B2 sind Schmelzklebstoffe bekannt, die eine Polymerzusammensetzung und eine ionische Flüssigkeit enthalten. Durch die Anwesenheit von ionischen Gruppen in der ionischen Flüssigkeit kann das Klebeverhalten der Polymerzusammensetzung zu polaren oder durch die ionischen Flüssigkeiten angequollenen oder angelösten Oberflächen verbessert werden.

Um die Temperatur in konventionellen Klebeverfahren einzustellen, müssen beide miteinander zu verklebenden Teile für die gewünschte Dauer entsprechend erhitzt werden, d.h. also nicht nur die Klebestelle und ihre unmittelbare Umgebung, sondern wesentliche Teile oder die gesamten Werkstücke. Bei größeren Werkstücken mit entsprechend großer Wärmekapazität und großen Stückzahlen - z.B. beim Kleben in der Automobilindustrie - resultieren daraus erhebliche Zeit- und Energieaufwände. Weiters ist es bei größeren Werkstücken auch nicht so einfach möglich, die Dauer der Erwärmung sehr exakt zu steuern und z.B. eine sehr hohe Temperatur nur sehr kurz einwirken zu lassen, da ja Aufheiz- und Abkühlkurve aufgrund der hohen Wärmekapazität des Werkstückes relativ flach sind. Aus eben diesem Grund ist es auch nicht möglich, die Klebestelle kurzfristig und lokal auf Temperaturen oberhalb der thermischen Zersetzungstemperatur des Werkstückes zu erhitzen.

Um die Energie zum Erhitzen der Klebestelle gezielt einbringen zu können und die o.g. Nachteile zu überwinden, wurden in der Vergangenheit Versuche mit Mikrowellenbestrahlung unternommen. Mikrowellenstrahlung ist definiert als elektromagnetische Strahlung im Frequenzbereich 300 MHz - 300 GHz (siehe dazu z.B. CD Römpp Chemie Lexikon 1.0) mit den üblichen Standardfrequenzem von 2,45 GHz und 915MHz. Im Sinne dieser Anmeldung werden aber auch elektromagnetische Frequenzen außerhalb dieser Definition beansprucht, insbesondere solche die unterhalb 300 MHz liegen.

Da Klebstoffe im allgemeinen kein besonders gutes Einkoppelungsverhalten zeigen, wurden diesen mikrowellenabsorbierende Pigmente und (Nano)-Partikel zugesetzt, welche z.B. aus Graphit, Ruß, Metallen, Ferroelektrika wie Ferrit, Eisencarbonyl, Quarz, Turmalin, Bariumtitanat, Lithiumsulfat, Kaliumnatriumtartrat, Ethylendiamintartrat und Blei-Zirkonium-Titanat bestehen können. Es wurden auch Versuche mit elektrisch leitfähigen Polymeren wie Polyaniline, Polypyrrole, Polyalkyl-thiophene und Poly(4,4'-diphenylendiphenylvinylen) durchgeführt (siehe dazu z.B. Bosman et al. (2003), Appl. Phys. Lett., 82, 9, 1353-1355; Peng, C. H. et al. (2005), Mater. Sci. Eng., B, 117,1, 27-36; Phang, S.W. et al. (2005), Thin Solid Films, 477, 1-2, 125- 130; Bregar, V. B. (2004), EEE Trans. Magn., 40, 3, 1679-1684; Chandrasekhar, P.; Naishadham, K. (1999), Synth. Met, 105, 2, 115- 120; Petrov, V. M.; Gagulin, V. V. (2001), Inorg. Mater., 37,2, 93-98; Saib, A. et al. (2006), IEEE Trans. Microwave Theor. Tech, 54, 6, 2745-2754; Truong, V. T. et al. (1998), J. Mater. Sci, 33, 20, 4971-4976; Zou, Y. H. et al. (2006), J. Magn. Magn. Mater, 302, 2, 343-347; WO 99/24520; WO 93/02867; DE 10040325.

Der Anwendung aller dieser Partikel und elektrisch leitenden Polymeren sind aber in der industriellen Klebepraxis einige gravierende Nachteile gemeinsam, welche einem breiten Einsatz der Mikrowellen-Verklebung bis heute entgegengestanden ist:
- Um eine Mikrowelleneinkoppelung zu erreichen, welche im Vergleich zur konventionellen Erwärmung einen zeitlichen und energetischen Vorteil bietet, müssen sehr große Mengen an Partikeln - bis zu mehrere 10%w - zugesetzt werden. Dies verändert im allgemeinen die Eigenschaften des Klebers erheblich und führt zu deutlichen Performanceeinbußen. Oft werden aber selbst bei Zumischung so großer Mengen noch immer keine ausreichenden Einkopplungen erreicht.
- Da diese Partikel nur Füllstoffe sind, binden sie nicht in die Polymermatrix ein; sie leisten dadurch keinen Beitrag zur Festigkeit und Klebekraft des Klebers. Eine chemische Funktionalisierung der Partikel ist in der Regel zu aufwendig.
- Die Partikel sollen so klein als möglich sein, um bei der Verarbeitung keine mechanischen Nachteile hervorzurufen, weshalb Nanopartikel besonders geeignet sind. Diese sind aber kostspielig, müssen gegen Agglomeration aufwendig stabilisiert werden und sind nur in beschränktem Maße industriell verfügbar.
- Die Partikel verändern das optische Erscheinungsbild der Klebestelle erheblich: So sind z.B. Graphit, Ruß, Metalle, Ferrit usw. schwarz gefärbt.

Der vorliegenden Erfindung stellt sich die Aufgabe, einen Klebstoff bzw. eine Klebstoffzusammensetzung zu schaffen, welcher bzw. welche die beschriebenen Nachteile nicht oder nur in geringerem Masse aufweist bzw. aufweisen.

Diese Aufgabe wird erfindungsgemäß dadurch gelöst, daß dem Klebstoff anstatt fester Partikel eine ionische Flüssigkeit zugefügt wird.

In einem Aspekt stellt die vorliegende Erfindung ein Verfahren zum Aushärten einer Klebstoffzusammensetzung unter Anwendung von Mikrowellen, zur Verfügung, das dadurch gekennzeichnet ist, daß die Klebstoffzusammensetzung eine ionische Flüssigkeit [A]⁺ₐ[B]^{a-} enthält, wobei [A]⁺ für ein Kation, [B]^{a-} für ein Anion und a für eine ganze Zahl steht.

Ein Verfahren, das gemäß vorliegender Erfindung zur Verfügung gestellt wird, wird hierin auch als "Verfahren nach (gemäß) vorliegender Erfindung" bezeichnet.

Unter "Aushärten" in einem Verfahren gemäß vorliegender Erfindung ist das Erreichen einer vorgegebenen Zielfestigkeit des Klebstoffs zu verstehen, z.B. ganz allgemein das Hartwerden des Klebstoffes, egal ob chemisch, thermisch (Schmelzklebstoff), physikalisch (Abdampfen von Lösungsmittel) oder wie auch immer, wie etwa das chemische Aushärten von Reaktivklebern im Sinne einer Polymerisation oder Kondensation, wobei die Klebstoffpolymere vor dem Aushärten vorhanden sind und nicht erst durch Polymerisation der Monomere entstehen.

In einem weiteren Aspekt steht in einem Verfahren gemäß vorliegender Erfindung [A]⁺ für ein Ammonium-Kation [R^{1'}R¹R²R³N]⁺, ein Phosphonium-Kation [R^{1'}R¹R²R ³P]⁺, ein Sulfonium-Kation [R^{1'}R¹R²S]⁺, ein heteroaromatisches Kation oder ein Guanidinium Kation R³R^{3'}N(C=NR¹R^{1'})NR²R^{2'} der Formel 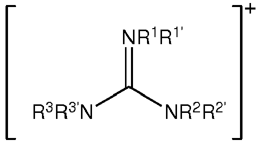 worin R¹,R^{1'},R²R^{2'} und R³,R^{3'} für Wasserstoff oder organische Reste stehen, z.B. jeweils unabhängig voneinander für Wasserstoff, oder unsubstituiertes Alkyl, Alkenyl, Alkinyl, Cycloalkyl, Cycloalkenyl, Aryl oder gesättigtes oder ungesättigtes Heterocyclyl, wie z.B. Heteroaryl, stehen, wobei die 7 letztgenannten Reste jeweils unabhängig voneinander unsubstituiert oder substituiert sein können durch
ein oder mehr Halogen und/oder 1 bis 3 Reste ausgwählt aus
C₁-C₆-Alkyl, Aryl, gesättigtes oder ungesättigtes Heterocyclyl, wie Heteroaryl, C₃₋₇-Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin
R^{c} und R^{d} unabhängig voneinander für Wasserstoff, C₁-C₆-Alkyl, C₁-C₆-Halogenalkyl, Cycloalkyl, wie Cyclopentyl, Cyclohexyl, Phenyl, Tolyl oder Benzyl stehen; oder zwei der Reste R¹,R^{1'},R²,R^{2'},R³,R^{3'} bilden gemeinsam mit dem Heteroatom, an welchem sie gebunden sind, einen gesättigten oder ungesättigten Ring aus, der unsubstituiert oder substituiert ist, und wobei jede Kohlenstoffkette durch ein oder mehrere Heteroatome ausgewählt aus der Gruppe O, S, NH oder N(C₁-C₄-Alkyl) unterbrochen sein kann.

In einem Verfahren gemäß vorliegender Erfindung ist ein Heterocyclrest in der Bedeutung einer der Reste von [A]⁺, insbesondere ungesättigt und insbesondere ausgewählt aus einem 5- oder 6-gliedrigen Heteroaromat, der mindestens ein Stickstoffatom sowie gegebenenfalls ein Sauerstoff- oder Schwefelatom aufweist, und der unsubstituiert oder substituiert ist und/oder anneliert ist,
insbesondere ausgewählt aus der Gruppe der Formel 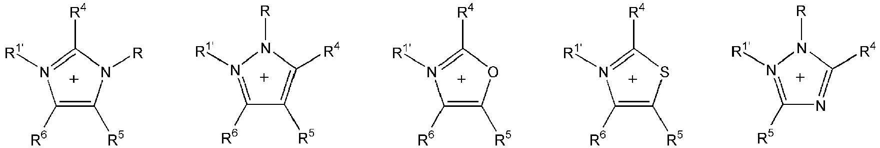 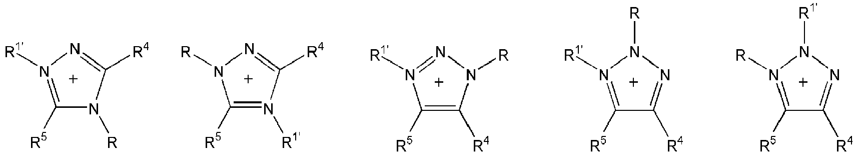 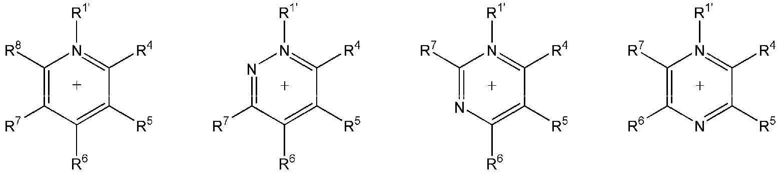 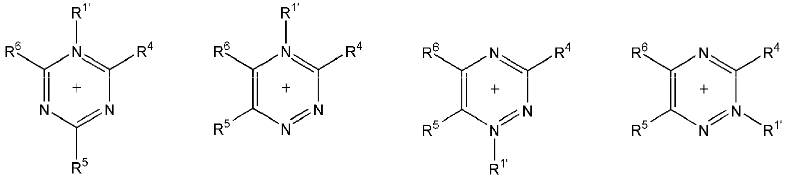 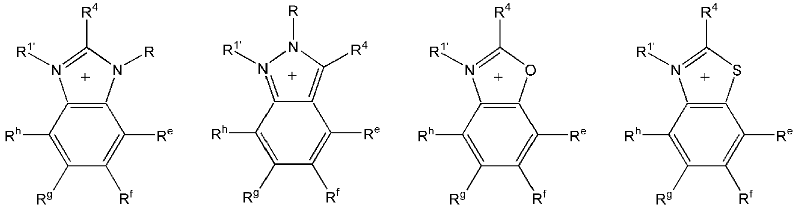 worin
R, R^{1'} unabhängig voneinander Wasserstoff, (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, wobei die 6 letztgenannten Reste jeweils unabhängig voneinander unsubsutituiert sind, oder substitutiert durch
ein oder mehrere Halogenreste, und/oder 1 bis 3 Reste ausgewählt aus der Gruppe (C₁-C₃₀)Alkyl, Aryl, gesättigtes oder ungesättigtes Heterocyclyl, insbesondere Heteroaryl, CC₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin
   R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
   R⁴, R⁵, R⁶, R⁷, R⁸ unabhängig voneinander Wasserstoff, Halogen, Nitro, Cyano, OR^{c}, SR^{c}, NR^{c}R^{d}, COR^{c}, COOR^{c}, CO-NR^{c}R^{d}, (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, bedeuten, wobei die 6 letztgenannten Reste jeweils unabhängig voneinander unsubstiuiert sind, oder substituiert durch
   ein oder mehre Halogen und/oder 1 bis 3 Reste ausgewählt aus der Gruppe (C₁-C₆)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , wobei R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl,
   oder
zwei der Reste R, R⁴, R⁵, R⁶, R⁷, R⁸, welche benachbart sind, bilden gemeinsam mit dem Atom, an welchem sie gebunden sind, einen Ring aus, wobei dieser ungesättigt oder gesättigt, insbsondere aromatisch, unsubstituiert oder substituiert sein kann und wobei die durch die betreffenden Reste gebildete Kohlenstoffkette durch ein oder mehrere Heteroatome ausgewählt aus der Gruppe O, S, N, NH oder N(C₁-C₄)Alkyl unterbrochen sein kann;
R^{e}, R^{f}, R^{g}, R^{h} unabhängig voneinander Wasserstoff, Alkyl-, Alkenyl-, Alkinyl-, Cycloalkyl-, Cycloalkenyl-, Aryl- oder Heteroarylreste, bedeuten, wobei die 7 letztgenannten Reste jeweils unabhängig voneinander ein oder mehrere Halogenreste tragen können und/oder 1 bis 3 Reste ausgewählt aus der Gruppe (C₁-C₆)Alkyl, Aryl, Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , wobei R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl bedeuten.

In einem weiteren Aspekt ist in einem Verfahren gemäß vorliegender Erfindung [B]^{a-} ausgewählt aus:
- Fluorid, Chlorid, Bromid, Iodid, Dicyanamid, Thiocyanat; Perchlorat, Hexafluorophosphat, Nitrit, Nitrat, Sulfat, Hydrogensulfat, Carbonat, Hydrogencarbonat, Alkylcarbonat, Methylcarbonat, Arylcarbonat; Phosphat; Hydrogenphosphat; Dihydrogenphosphat; Sulfamat H₂N-SO₃⁻, deprotoniertes Acesulfame (6-methyl-2,2-dioxo-oxathiazin-4-olat), deprotoniertes Saccharine (1,1-Dioxo-3-one-1,2-benzothiazolate), Cyclamate (deprotonierte Cyclohexanesulfamidsäure),
- ein tetrasubstituiertes Borat der allgemeinen Formel (Va) [BRⁱR^{j}R^{k}R^{l}]⁻, worin Rⁱ bis R^{l} unabhängig voneinander für Fluor oder (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, wobei die 6 letztgenannten Reste jeweils unabhängig voneinander unsubstituiert sind oder substituiert durch
   ein oder mehr Halogen und/oder
   1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin
   R^{c} und R^{d} unabhängig voneinander für Wasserstoff, (C₁-C₆)Alkyl, Halo (C₁-C₆)alkyl, Cycloalkyl, insbesondere Cyclopentyl, Cyclohexyl, Phenyl, Tolyl oder Benzyl stehen;
   oder
   zwei der Reste Rⁱ bis R^{l} bilden gemeinsam mit dem Bor-Atom, an welchem sie gebunden sind einen fünf-, sechs- oder siebengliedrigen Ring aus, wobei dieser gesättigt oder ungesättigt, unsubstituiert oder substituiert sein kann und wobei die durch die betreffenden Reste gebildete Kohlenstoffette durch ein oder mehrere Heteroatome ausgewählt aus der Gruppe O, S, N, NH oder N-C₁-C₄-Alkyl unterbrochen sein kann, oder
- organisches Sulfonat der allgemeinen Formel (Vb)[R^{m}-SO₃]⁻ oder organisches Sulfat der allgemeinen Formel (Vc)[R^{m}-OSO₃]⁻, worin
   R^{m} für (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl steht, wobei die 6 letztgenannten Reste jeweils unabhängig voneinander unsubstituiert sind oder substitutiert durch
   ein oder mehr Halogen, und/oder
   1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan, worin
   R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
- Carboxylat der allgemeinen Formel (Vd) [Rⁿ-COO]⁻, worin
   Rⁿ für Wasserstoff oder (C₁-C₃₀)(Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, steht, wobei die 6 letztgenannten Reste jeweils unabhängig voneinander unsubstituiert sind, oder substituiert durch
   ein oder mehrere Halogen, und/oder
   1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan, worin R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
   oder
- Carboxylat, welches formal durch Deprotonierung einer oder gegebenenfalls auch mehrerer Carbonsäuregruppen aus Fruchtsäuren, Zuckersäuren, Aminosäuren, Fettsäuren, flüchtigen Säuren und Harzsäuren abstammt bzw. welches zu diesen Säuren konjugiert ist;
- ein (Fluoralkyl)fluorphosphat der allgemeinen Formel (Ve) [PFₓ(C_{y}F_{2y+1-z}H_{z})₆₋ₓ]⁻, wobei 1 ≤x≤6, 1≤y≤8 und 0≤z≤2y+1; oder
- ein Imid der allgemeinen Formeln (Vf) [R°-SO₂-N-SO₂-R^{p}]⁻ , (Vg) [R^{q}-SO₂-N-CO-R^{r}]⁻ oder (Vh) [R^{s}-CO-N-CO-R^{t}]⁻, worin
   R^{o} bis R^{t} unabhängig voneinander für Wasserstoff oder (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, steht, wobei die 6 letztgenannten Reste jeweils unabhängig voneinander unsubstituiert sind oder substituiert durch
   ein oder mehrere Halogen und/oder
   1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin
   R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
- ein organisches Phosphat der allgemeinen Formel (Vi) [R^{u}-OPO₃]²⁻ oder (Vj) [R^{u}O-PO₂-OR^{v}]⁻ oder organisches Phosphonat der allgemeinen Formel (Vk) [R^{u}-PO₃]²⁻ oder (V1) [R^{u}-PO₂-OR^{v}]⁻, worin
   R^{u} und R^{v} unabhängig voneinander für Wasserstoff oder (C₁-C₃₀)Alkyl, (C₃-C₁₂)Cycloalkyl, (C₂-C₃₀)Alkenyl, (C₃-C₁₂)Cycloalkenyl, Aryl oder Heteroaryl stehen, wobei die 6 letztgenannten Reste jeweils unabhängig voneinander unsubstituiert oder substituiert sind durch
   ein oder mehr Halogen und/oder 1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin
   R^{c} und R^{d} unabhängig voneinander für Wasserstoff, C₁-C₆-Alkyl, C₁-C₆-Halogenalkyl, Cyclopentyl, Cyclohexyl, Phenyl, Tolyl oder Benzyl stehen.

Beispiele für Fruchtsäuren mögen insbesondere Oxalsäure, Benzoesäure, Salicylsäure, Zitronensäure, Weinsäure, Ascorbinsäure, Milchsäure und Apfelsäure sein.

Beispiele für Zuckersäuren mögen insbesondere Uronsäuren und Onsäuren wie z.B. lineare oder auch cyclische Tetronsäuren, Tetruronsäuren, Pentonsäuren, Penturonsäuren, Hexonsäuren, Hexuronsäuren, insbesondere Gluconsäuren, Glucuronsäuren, bzw. protonierte Anionen von Gluconat, Glucuronat, Mannonat, Mannuronat, Galatonat, Galacturonat, Fructonat, Fructuronat, Xylonat und ähnliche sein.

Beispiele für Aminosäuren bzw. natürliche Aminosäuren mögen insbesondere Alanin, Arginin, Asparagin, Asparaginsäure, Cystein, Glutamin, Glutaminsäure, Glycin, Histidin, Isoleucin, Leucin, Lysin, Methionin, Phenylalanin, Prolin, Serin, Threonin, Tryptophan, Tyrosin und Valin sein.

Insbesondere mögen die Fettsäuren Monocarbonsäuren mit einer bis 26 Kohlenstoffatomen (C1 bis C26) sein, wobei die Fettsäuren ungesättigte, gesättigte oder Mischungen aus gesättigten und/oder ungesättigten Fettsäuren sein mögen. Beispiele für Fettsäuren mögen Alkylcarbonsäuren, Alkencarbonsäuren, Alkadienylcarbonsäuren, insbesondere Ameisensäure, Essigsäure, Propionsäure, Acrylsäure, Methacrylsäure, Buttersäure, Isobuttersäure, Valeriansäure, Crotonsäure, Capronsäure, Caprylsäure, Caprinsäure, Pelargonsäure, Laurinsäure, Myristinsäure, Palmitinsäure, Margarinsäure, Arachinsäure, Behensäure, Palmitoleinsäure, Ölsäure, Elaidinsäure, Vaccensäure, Icosensäure, Cetoleinsäure, Linolensäure, Linolsäure, Sorbinsäure und ähnliche sein.

In einem besonderen Aspekt in einem Verfahren der vorliegenden Erfindung ist das Anion [B]^{a-} ein Komplex aus einem zentralen Metallatom M^{+v} der Oxidationszahl v = 1,2,3,4,5 oder 6 und Liganden X⁻, z.B. ein Komplex der allgemeinen Formel [M^{+v}Xᵥ₊₁]⁻ (Vm) oder [M^{+v}Xᵥ₊₂]²⁻(Vn) oder [M^{+v}Xᵥ₊₃]³⁻(Vo), worin
M^{+v}, ausgewählt ist aus den Elementen der Übergangsmetalle, bevorzugt ausgewählt aus den Elementen Ag, Al, Ce, Cs, Cr, Co, Cu, Dy, Er, Eu, Gd, Ho, Ir, Fe, Mn, Mo, Nd, Ni, Pt, Pr, Re, Rh, Rb, Ru, Sm, Sn, Ta, Tb, Tm, Ti, W, V und Y, besonders bevorzugt in den Oxidationsstufen Ag⁺, Al⁺³, Ce⁺², Ce⁺³, Ce⁺⁴, Cs⁺¹, Cr⁺², Cr⁺³, Cr⁺⁶, Co⁺², Co⁺³, Cu⁺¹, Cu⁺², Dy⁺³, Er⁺², Eu⁺³, Eu⁺³, Gd⁺², Gd⁺³, Ho⁺², Ho⁺³, Ir⁺⁴, Fe⁺², Fe⁺³, Mn⁺², Mn⁺³, Mo⁺², Mo⁺³, Mo⁺⁴, Mo⁺⁵, Nd⁺², Nd⁺³, Ni⁺², Ni⁺³, Pt⁺⁴, Pr⁺², Pr⁺³, Re⁺⁴, Re⁺⁵, Re⁺⁶, Rh⁺², Rh⁺³, Rb⁺⁴, Ru⁺³, Ru⁺⁴, Sn⁺², Sn⁺⁴, Sm⁺², Sm⁺³, Ta⁺⁵, Tb⁺³, Tm⁺³, Ti⁺², Ti⁺³, W⁺⁴, W⁺⁵, V⁺², V⁺³, V⁺⁴, V⁺⁵, Y⁺² und Y⁺³,
worin jeder einzelne der Liganden X voneinander unabhängig bevorzugt ausgewählt ist aus: Fluorid, Chlorid, Bromid, Iodid, Thiocyanat, Dicyanamid, Nitrit; Nitrat; Acetylaceton; Acyl; Adenin; 2,2'-Azobisisobutyronitril; Alanin; Allyl; Allyloxycarbonyl; Wasser; Aryl; Arginin; Asparagin; Aspartat; BIABN; Biotinyl; 2,2'-bis(diphenyl-phosphino)-6,6'-dimethoxy-1,1'-biphenyl; 2,2'-Binaphtyldiphenyldiphosphin; 1,2-Bis[4,5-dihydro-3H-binaphtho[1,2-c:2',1'-e]phosphepino]benzen; 1,1'-Bis{4,5-dihydro-3H-dinaphtho[1,2-c: 2',1'-e]phosphepino}ferrocen; 4,4'-Di-tert-butyl-4,4',5,5'-tetrahydro-3,3'-bis-3H-di-naphtho[2,1-c:1',2'-e]phosphepin; BINAL; 4,5-Dihydro-3H-dinaphtho[2,1-c;1',2'-e]phosphepin; 2,2'-Binaphtyldiol; Bis-tert-butyl-bipyridin; Benzylmethylphenylphosphin; Benzyl; tert-Butoxycarbonyl; Bis(2-((S)-4-iso-propyl-4,5-dihydrooxazol-2-yl)phenyl)amin; Bis(2-((S)-4-tert-butyl-4,5-dihydrooxazol-2-yl)phenyl)amin; 1,2-Bis(2,5-diethyl-phospholano)-ethan; Butoxy-carbonyl-4-diphenylphosphino-2-diphenylphosphino-methyl-pyrrolidin; 2,2'-Bipyridin; Benzoyl; Benzyloxycarbonyl; CO; Cycloheptatrienyl; Citrullin; Citrat; Cyanid; Cyclooctadien; Cyclooctatetraen; Cyclopentadienyl; Pentamethylcyclopentadienyl; Cyclohexyl; Cytidin; Cystein; Cytosin; Dibenzilidenaceton; O-Isopropyliden-2,3-dihydroxy-1,4-bis(diphenylphosphino)butan; (1R,2R)-Bis[(2-methoxyphenyl)phenyl-phosphino]ethan; 4-Dimethylaminopyridin; Dimethylglyoxim Dipivaloylmethanat; Dess-Martin-Periodinan; 1,4,7,10-Tetraaza-cyclododecan-1,4,7,10-tetraacetat; Diphenylphosphenylethan; Diphenylphosphenylmethan; Diphenylphosphenylpropan; desoxy-Ribose; Diethylentriamin-Pentaacetat; Bis(2,5-dimethylphospholano)-benzene; Ethylendiamintetraacetat; Ethylendiamin; Fluorenylmethoxycarbonyl; 7,7-dimethyl-1,1,1,2,2,3,3-heptafluorooctan-4,6-dionato; Galactose; Galactosamin; N-Acetylgalactosamin, Glycolyl; Glucose; Glucosamin, N-Acetyl-Glucosamin, Glutamin, Glutamat, Glycin, Guanin; Guanosin; Hämoglobin; Hexafluoroacetylacetonat; Histidin; Hexamethylphosphorsäuretriamid; Hydroxyprolin; Isoleucin; Leucin; Lysin; 2,2'-Bis[(N,N-dimethylamino)(phenyl)methyl]-1,1'-bisdicyclohexyl-phosphino)ferrocen; Myoglobin; Methionin; Methämoglobin; Metmyoglobin; 3,5-Dioxa-4-phosphacyclohepta[2,1-a;3,4-a']dinapthalen-4-yl)dimethylamin; Methylphenyln-propyl phosphin; Methylsulfon; Bicyclo[2.2.1]hepta-2,5-; Neuraminsäure; N-Acetyl-Neuraminsäure; N-Glycolyl-Neuraminsäure; 2,3-Bis(diphenylphosphino)-bicyclo[2.2.1]hept-5-en; Nitrilo-triessigsäure; Ornithin; Succinat; Oxalat; Phenyl o-anisylmethylphosphin; Phthalocyanin; Phenylalanin; Phenanthrolin; Picolylamin; Piperidin; para-Nitro-Benzoesäure; Porphyrin; Prolin; Pyridyl; PYBOX; Pyroglutamat ; Pyrazin; Ribose; Sarcosin; Salen; Serin; Succinyl; 1,4,7-Triazacyclononan; tert-butyl-di-methyl-silyl; Tartrat; Terpyridin; Thymidin; Threonin; Thymin; Tetramethylethylendiamin; Trimesinsäure; Tris(pyrazolyl)borat; Triphenylphosphan; Tryptophan; Tyrosin; Tetrazol; Ubiquitin; Uracil; Uridin; Valin.

In einem Verfahren gemäß vorliegender Erfindung in einem besonderen Aspekt
- enthalten definierte, Kohlenstoff enthaltende organische, gesättigte oder ungesättigte, acyclische oder cyclische, aliphatische, aromatische oder araliphatische Reste 1 bis 30 Kohlenstoffatome,
- bedeuten die Reste Rⁱ bis R^{l} beim tetrasubstituierten Borat (Va), der Rest R^{m} beim organischen Sulfonat (Vb) und Sulfat (Vc), der Rest Rⁿ beim Carboxylat (Vd), die Reste R^{o} bis R^{t} bei dem (Fluoralkyl)fluorphosphat (Ve), den Imiden (Vf),(Vg) und (Vh), die Reste R^{u} und R^{v} bei den organischen Phosphaten (Vi),(Vj) und den organischen Phosphonaten (Vk),(Vl) unabhängig voneinander bevorzugt
   (C₁-C₃₀)Alkyl und deren aryl-, heteroaryl-, cycloalkyl-, halogen-, hydroxy-, amino-, carboxy-, formyl-, -O-, -CO-, - CO-O- oder -CO-N< substituierte Komponenten, insbesondere
   Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder CₙF_{2(n-a)+(1-b)}H_{2a+b} mit n ≤30, 0≤a≤n und b = 0 oder 1 (beispielsweise CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅); (C₃-C₁₂)Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder CₙF_{2(n-a)-(1-b)}H_{2a-b} mit n ≤30, 0≤a≤n und b = 0 oder 1;
   (C₂-C₃₀)Alkenyl und deren aryl-, heteroaryl-, cycloalkyl-, halogen-, hydroxy-, amino-, carboxy-, formyl-, -O-, -CO- oder -CO-O-substituierte Komponenten, insbesondere 2-Propenyl, 3-Butenyl, cis-2-Butenyl, trans-2-Butenyl oder CₙF_{2(n-a)-(1-b)}H_{2a-b} mit n ≤30, 0 ≤ a ≤ n und b = 0 oder 1;
   (C₃-C₁₂)Cycloalkenyl und deren aryl-, heteroaryl-, cycloalkyl-, halogen-, hydroxy-, amino-, carboxy-, formyl-, -O-, -CO- oder -CO-O-substituierte Komponenten, insbesondere 3-Cyclopentenyl, 2-Cyclohexenyl, 3-Cyclohexenyl, 2,5-Cyclohexadienyl oder CₙF_{2(n-a)-3(1-b)}H_{2a-3b} mit n ≤30, 0 ≤ a ≤ n und b = 0 oder 1;
   Aryl oder gesättigtes oder ungesättigtes Heterocyclyl, insbesondere Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, insbesondere Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0≤a≤5.

In einem Verfahren der vorliegenden Erfindung ist [B]^{a-} ist vorzugsweise Fluorid, Chlorid, Dicyanamid, Thiocyanat; Nitrat, Sulfat, Hydrogensulfat, Methylcarbonat, Phosphat; Hydrogenphosphat; Dihydrogenphosphat; Sulfamat, H₂N-SO₃⁻.

Handelt es sich bei dem Anion [B]^{a-} um ein tetrasubstituiertes Borat (Va), so sind bei diesem bevorzugt alle vier Reste Rⁱ bis R^{l} identisch, wobei diese bevorzugt für Fluor, Trifluormethyl, Pentafluorethyl, Phenyl, 3,5-Bis(trifluormethyl)phenyl stehen. Besonders bevorzugte tetrasubstituierte Borate (Va) mit vier identischen Resten sind Tetrafluoroborat, Tetraphenylborat und Tetra[3,5-bis(trifluormethyl)phenyl]borat; oder es handelt sich ebenfalls bevorzugt um ein tetrasubstituiertes Borat (Va) mit vier direkt an das Boratom gebundenen Sauerstoffatomen, welche paarweise mit gesättigten oder ungesättigten C2 bis C4 Alkyl- bzw. Alkenylketten verbunden sind, welche substituiert oder unsubstituiert sein können oder an welche im Falle der Alkenylketten ein aromatischer Ring anneliert sein kann, und somit zwei identische oder unterschiedliche fünf-, sechs- oder siebengliedrige Ringe bilden, besonders bevorzugt Bis(mandelato)borat, Bis(salicylato)borat, Bis(oxalato)borat, Bis(glycolato)borat, Bis(malonato)borat, Bis(succinato)borat, Bis(maleinato)borat, Bis(catecholato)borat (die deprotonierten Reaktionsprodukte der Borsäure mit Mandelsäure, Salicylsäure, Oxalsäure, Glykolsäure, Malonsäure, Bernsteinsäure, Maleinsäure, Benzol-1,2-diol)

Handelt es sich bei dem Anion [B]^{a-} um ein organisches Sulfonat (Vb) oder Sulfat (Vc) so steht der Rest R^{m} bevorzugt für Methyl, Trifluormethyl, Pentafluorethyl, p-Tolyl oder C₉F₁₉. Besonders bevorzugte organische Sulfonate (Vb) sind Trifluormethansulfonat (Triflat), Methansulfonat, Nonadecafluorononansulfonat (Nonaflat) und p-Toluolsulfonat; besonders bevorzugte organische Sulfate (Vc) sind Methylsulfat, Ethylsulfat, n-Propylsulfat, i-Propylsulfat, Butylsulfat, Pentylsulfat, Hexylsulfat, Heptylsulfat, Octylsulfat, Nonylsulfat und Decylsulfat sowie längerkettige n-Alkylsulfate; Benzylsulfat, Alkylarlysulfat.

Handelt es sich bei dem Anion [B]^{a-} um ein Carboxylat (Vd), so steht der Rest Rⁿ bevorzugt für Wasserstoff, Trifluormethyl, Pentafluorethyl, Phenyl, Hydroxyphenylmethyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl.
Besonders bevorzugte Carboxylate (Vc) sind Formiat, Acetat, Propionat, Butyrat, Valeriat, Benzoat, Mandelat, Trichloracetat, Dichloracetat, Chloracetat, Trifluoracetat, Difluoracetat, Fluoracetat. Weitere besonders bevorzugte Carboxylate (Vc) sind jene, welche formal durch Deprotonierung der folgenden Säuren entstehen und somit zu diesen konjugiert sind: Oxalsäure, Benzoesäure, Salicylsäure, Zitronensäure, Weinsäure, Ascorbinsäure, Milchsäure, Bernsteinsäure, Sulfobernsteinsäure, Sulfobernsteinsäure Mono- oder Dialkylester - z.B. Sulfobernsteinsäure-bis-2-ethylhexylester, Gluconsäuren, Glucuronsäuren, Mannonsäuren, Mannuronsäuren, Galactonsäuren, Galacturonsäuren, Fructonsäuren, Fructuronsäuren, Xylonsäuren, Alanin, Arginin, Asparagin, Asparaginsäure, Cystein, Glutamin, Glutaminsäure, Glycin, Histidin, Isoleucin, Leucin, Lysin, Methionin, Phenylalanin, Prolin, Serin, Threonin, Tryptophan, Tyrosin, Valin gesättigte und/oder ungesättigte Fettsäuren und deren Gemische mit einer bis 26 Kohlenstoffatomen (C1 bis C26), z.B. Acrylsäure, Methacrylsäure, Isobuttersäure, Valeriansäure, Crotonsäure, Capronsäure, Caprylsäure, Caprinsäure, Pelargonsäure, Laurinsäure, Myristinsäure, Palmitinsäure, Margarinsäure, Arachinsäure, Behensäure, Palmitoleinsäure, Ölsäure, Elaidinsäure, Vaccensäure, Icosensäure, Cetoleinsäure, Linolensäure, Linolsäure, Sorbinsäure.

Handelt es sich bei dem Anion [B]^{a-} um ein (Fluoralkyl)fluorphosphat (Ve) [PFₓ(C_{y}F_{2y+1-z}H_{z})₆₋ₓ]⁻, so ist z bevorzugt 0. Besonders bevorzugt sind (Fluoralkyl)fluorphosphate (Ve), bei denen z = 0, x = 3 und 1≤y≤4, konkret [PF₃(CF₃)₃]⁻, [PF₃(C₂F₅)₃]⁻, [PF₃(C₃F₇)₃]⁻ und [PF₃(C₄F₇)₃]⁻.

Handelt es sich bei dem Anion [B]^{a-} um ein Imid (Vf), (Vg) oder (Vh), so stehen die Reste R^{o} bis R^{t} unabhängig voneinander bevorzugt für Wasserstoff, Trifluormethyl, Pentafluorethyl, Phenyl, Trichlormethyl, Dichlormethyl, Chlormethyl, Trifluormethyl, Difluormethyl, Fluormethyl oder unverzweigtes oder verzweigtes C₁- bis C₁₂-Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl oder Dodecyl. Besonders bevorzugte Imide (Vf), (Vg) und (Vh) sind [F₃C-SO₂-N-SO₂-CF₃]⁻, [F₃C-SO₂-N-CO-CF₃]⁻, [F₃C-CO-N-CO-CF₃]⁻ und jene, in denen die Reste R^{o} bis R^{t} unabhängig voneinander für Wasserstoff, Methyl, Ethyl, Propyl, Butyl, Phenyl, Trifluormethyl, Difluormethyl oder Fluormethyl stehen.

Handelt es sich bei dem Anion [B]^{a-} um organisches Phosphat (Vi),(Vj) oder organisches Phosphonat (Vk),(Vl) stehen die Reste R^{c} und R^{v} voneinander unabhängig bevorzugt für Methyl, Ethyl, n-Propyl, iso-Propyl, Butyl, Phenyl und p-Tolyl. Besonders bevorzugte organische Phosphate (Vj) sind Dimethylphosphat, Diethylphosphat, Dibutylphosphat, Bis(2-ethylhexyl) phosphat, Diphenylphosphat, Dibenzylphosphat. Besonders bevorzugtes organisches Phosphonate (V1) sind Dimethylphosphonat und Diethylphosphonat.

Handelt es sich bei dem Anion [B]^{a-} um einen Metallkomplex der allgemeinen Formeln (Vm),(Vn) oder (Vo), so ist M^{+v} besonders bevorzugt ausgewählt aus den Elementen Ag, Al, Cr, Co, Cu, Fe, Mn, Mo, Nd, Ni, Sn, Ti, W, V, in den Oxidationsstufen Ag⁺, Al⁺³, Cr⁺², Cr⁺³ Cr⁺⁶, Co⁺², Co⁺³, Cu⁺¹, Cu⁺², Fe⁺², Fe⁺³, Mn⁺², Mn⁺³, Mo⁺², Mo⁺³, Mo⁺⁴, Mo⁺⁵, Nd⁺², Nd⁺³, Ni⁺², Ni⁺³, Sn⁺², Sn⁺⁴, Ti⁺², Ti⁺³, W⁺⁴, W⁺⁵, V⁺², V⁺³, V⁺⁴ und V⁺⁵. Jeder einzelne der Liganden X ist voneinander unabhängig besonders bevorzugt ausgewählt aus Fluorid, Chlorid, Bromid, Iodid, Thiocyanat, Dicyanamid, Acetylaceton; CO; Cyanid; Cyclopentadienyl; Dimethylglyoxim; Ethylendiamintetraacetat; Ethylendiamin; Succinat; Oxalat; Porphyrin.

Bevorzugte Kationen [A]⁺ sind jeweils quaternäre oder protonierte Ammonium-Kationen [R^{1'}R¹R²R³N]⁺, Phosphonium-Kationen [R^{1'}R¹R²R³P]⁺ oder Guanidinium Kationen R³R^{3'}N(C=NR¹R^{1'})NR²R^{2'} mit den Resten R¹,R^{1'},R²,R^{2'},R³ und R^{3'}, welche unabhängig voneinander für Wasserstoff, lineares oder verzweigtes (C₁-C₂₀)Alkyl, lineares oder verzweigtes (C₂-C₂₀)Alkenyl, insbesondere Vinyl und Allyl, Cyclohexyl, Phenyl, Benzyl oder Tolyl stehen.
Besonders bevorzugt sind dabei NH₄⁺; Guanidinium (protoniertes Guanidin); 1,1,3,3-Tetramethylguanidinium, 1,1,2,3,3-Pentamethylguanidinium, 1,1,2,2,3,3-Hexamethylguanidinium, Methylammonium, Ethylammonium, Propylammonium, Butylammonium, Hexylammonium, Octylammonium, Dimethylammonium, Diethylammonium, Dipropylammonium, Dibutylammonium, Dihexylammonium, Dioctylammonium, Diethylmethylammonium, Dipropylmethylammonium, Dibutylmethylammonium, Trimethylammonium, Triethylammonium, Tripropylammonium, Tributylammonium, Trihexylammonium, Trioctylammonium, Diethyldimethylammonium, Dipropyldimethylammonium, Dibutyldimethylammonium, Dihexyldimethyl-ammonium, Dioctyldimethylammonium, Triethylmethylammonium, Tripropylmethylammonium, Tributylmethylammonium, Trihexylmethyl-ammonium, Trioctylmethylammonium, Trimethylethylammonium, Trimethylpropylammonium, Trimethylbutylammonium, Trimethylhexyl-ammonium, Trimethyloctylammonium, Tetramethylammonium, Tetraethylammonium, Tetrapropylammonium, Tetrabutylammonium, Tetrahexylammonium, Tetraoctylammonium, 2-Hydroxyethyl-trimethylammonium (Cholinium), O-Acetylcholinium, Tris-(2-Hydroxyethyl)-ammonium, Tris-(2-Hydroxyethyl)-methylammonium, Tris-(2-Hydroxyethyl)-ethylammonium, 2-Methoxyethyltrimethylammonium (O-Methyl-Cholinium), Tris-(2-Methoxyethyl)-ammonium, Tris-(2-Methoxyethyl)-methylammonium, Tris-(2-Methoxyethyl)-ethylammonium, Bis-(2-Methoxyethyl)-dimethyl-ammonium, Triallylmethylammonium, Trimethylphosphonium, Triethylphosphonium, Tripropylphosphonium, Tributylphosphonium, Trihexylphosphonium, Trioctylphosphonium, Tetramethylphosphonium, Triethylmethylphosphonium, Tripropylmethyl-phosphonium, Tributylmethylphosphonium, Trihexylmethylphosphonium, Trioctylmethylphosphonium, Tetradecyl(trihexyl)phosphonium, Triisobutyl(methyl)phosphonium, Ethyl(tributyl)phosphonium, Octyl(tributyl)phosphonium, N-Decyl-N-methylpyrrolidinium, N-Octyl-N-methylpyrrolidinium, N-Hexyl-N-methylpyrrolidinium N-butyl-N-methylpyrrolidinium, N-propyl-N-methylpyrrolidinium, N-ethyl-N-methylpyrrolidinium, N,N- dimethylpyrrolidinium, N-allyl-N-methylpyrrolidinium, N-Decyl-pyrrolidinium, N-Octyl-pyrrolidinium, N-Hexyl-pyrrolidinium N-Butylpyrrolidinium, N-Propyl-pyrrolidinium, N-Ethyl-pyrrolidinium, N-Methylpyrrolidinium, N-Allyl-pyrrolidinium, Pyrrolidinium (protoniertes Tetrahydropyrrol), N-Decyl-N-methylmorpholinium, N-Octyl-N-methylmorpholinium, N-Hexyl-N-methylmorpholinium N-butyl-N-methylmorpholinium, N-propyl-N-methylmorpholinium, N-ethyl-N-methylmorpholinium, N,N- dimethylmorpholinium, N-allyl-N-methylmorpholinium, N-Decyl-morpholinium, N-Octyl-morpholinium, N-Hexyl-morpholinium N-Butylmorpholinium, N-Propyl-morpholinium, N-Ethyl-morpholinium, N-Methylmorpholinium, N-Allyl-morpholinium, Morpholinium (protoniertes 1,4-Oxazinan), N-Decyl-N-methylpiperidinium, N-Octyl-N-methylpiperidinium, N-Hexyl-N-methylpiperidinium N-butyl-N-methylpiperidinium, N-propyl-N-methylpiperidinium, N-ethyl-N-methylpiperidinium, N,N- dimethylpiperidinium, N-allyl-N-methylpiperidinium, N-Decylpiperidinium, N-Octyl-piperidinium, N-Hexyl-piperidinium N-Butyl-piperidinium, N-Propyl-piperidinium, N-Ethyl-piperidinium, N-Methylpiperidinium, N-Allyl-piperidinium, Piperidinium (protoniertes Hexahydropyridin).
Besonders bevorzugt sind weiters Imidazolium (protoniertes 1,3-Diazol), 1-Methylimidazolium, 1,2-Dimethylimidazolium, 1-Ethyl-imidazolium, 1-Vinylimidazolium, 1-Propyl-imidazolium, 1-iso-Propyl-imidazolium, 1-Allyl-imidazolium, 1-Butyl-imidazolium, 1-Ethyl-2-methylimidazolium, 1-Butyl-2-methylimidazolium, 1-Hexyl-imidazolium, 1-Octyl-imidazolium, 1,3-Dimethyl-imidazolium, 1,2,3-Trimethylimidazolium, 1-Ethyl-3-methyl-imidazolium, 1-Vinyl-3-methyl-imidazolium, 1-Vinyl-2,3-dimethyl-imidazolium, 1-Butyl-3-methylimidazolium, 1-Propyl-3-methylimidazolium, 1-iso-Propyl-3-methylimidazolium, 1-Allyl-3-methylimidazolium, 1-Propyl-2,3-dimethylimidazolium, 1-iso-Propyl-2,3-dimethylimidazolium, 1-Allyl-2,3-dimethylimidazolium, 1-Ethyl-2,3-dimethylimidazolium, 1-Butyl-2,3-dimethylimidazolium, 1-Hexyl-3-methylimidazolium, 1-Octyl-3-methylimidazolium, 1-Decyl-3-methylimidazolium, 1,3-Diethylimidazolium, 1,3-Dibutylimidazolium.
Weiters bevorzugt sind die protonierten Formen der starken Basen 1,5-Diazabicyclo[4.3.0]non-5-en (DBN); 1,8-Diazabicyclo[5.4.0]undec-7-en (DBU); 1,4-Diazabicyclo-[2.2.2]-octan (DABCO®); 1,8-Bis-(dimethylamino)-naphthalin (Proton Sponge®); N,N,N',N'-Tetramethylethylendiamin (TMEDA); 4,5-Bis-(dimethyl-amino)-fluoren; 1,8-Bis-(hexamethyltriaminophosphazenyl)naphthalin.

Den beschriebenen ionischen Flüssigkeiten in einem Verfahren gemäß vorliegender Erfindung können weiters 5 - 95 Gew.% Metallsalze [M]ₓ^{b+}[B]_{y}^{a-} zugesetzt sein, wobei a,b,x,y voneinander unabhängig die Zahlen 1,2,3 oder 4 bedeuten und wobei das Produkt aus x und b gleich dem Produkt aus y und a ist. Bevorzugte Metallkationen sind dabei Cr⁺², Cr⁺³, Co⁺², Co⁺³, Cu⁺¹, Cu⁺², Fe⁺², Fe⁺³, Mn⁺², Mn⁺³, Ni⁺², Ni⁺³, Ti⁺², Ti⁺³, Li⁺, Na⁺, K⁺, Cs⁺, Mg²⁺, Ca²⁺, Ba², Sr²⁺, Zr⁴⁺, Sn²⁺, Sn⁴⁺, Ag⁺, Zn²⁺ und Al³⁺, besonders bevorzugte sind Co⁺², Co⁺³, Cu⁺¹, Cu⁺², Fe⁺², Fe⁺³, Mn⁺², Mn⁺³, Ti⁺², Ti⁺³, Li⁺, Na⁺, K⁺, Mg²⁺, Ca²⁺, Zn²⁺ und Al³⁺.

Ionische Flüssigkeiten sind - im Sinne der anerkannten Literatur (z.B. Wasserscheid, Peter; Welton, Tom (Eds.); "Ionic Liquids in Synthesis", Verlag Wiley-VCH 2003; ISBN 3-527-30515-7; Rogers, Robin D.; Seddon, Kenneth R. (Eds.); "Ionic Liquids - Industrial Applications to Green Chemistry", ACS Symposium Series 818, 2002; ISBN 0841237891") - flüssige organische Salze oder Salzgemische bestehend aus organischen Kationen und organischen oder anorganischen Anionen, mit Schmelzpunkten von unter 100°C. In diesen Salzen können zusätzlich anorganische Salze gelöst sein und des weiteren auch molekulare Hilfsstoffe. Im Sinne dieser Anmeldung sehen wir die willkürlich mit 100°C festgelegte Grenze des Schmelzpunktes ionischer Flüssigkeiten in weiterem Sinne und schließen somit auch solche Salzschmelzen ein, die einen Schmelzpunkt von über 100°C, aber unter 200°C haben. Sie unterscheiden sich nämlich ansonsten nicht in Ihren Eigenschaften. Ionische Flüssigkeiten weisen äußerst interessante Eigenschaften auf, wie beispielsweise einen sehr geringen bis nicht messbaren Dampfdruck, einen sehr großen Liquidusbereich, gute elektrische Leitfähigkeit und ungewöhnliche Solvatations-Eigenschaften. Diese Eigenschaften prädestinieren sie für den Einsatz in verschiedenen Bereichen technischer Anwendungen. So können sie beispielsweise als Lösungsmittel (bei organischer und anorganischer Synthese im Allgemeinen, bei der Übergangsmetallkatalyse, der Biokatalyse, der Phasentransfer-Katalyse, bei Mehrphasen-Reaktionen, in der Photochemie, in der Polymersynthese und der Nanotechnologie), als Extraktionsmittel (bei der flüssig-flüssig- und der flüssig-gasförmigen-Extraktion im Allgemeinen, der Entschwefelung von Rohöl, der Entfernung von Schwermetallen aus Abwässern, der Flüssigmembranextraktion), als Elektrolyte (in Batterien, Brennstoffzellen, Kondensatoren, Solarzellen, Sensoren, in der Galvanotechnik, in der elektrochemischen Metallbearbeitung, in der elektrochemischen Synthese im Allgemeinen, bei der elektroorganischen Synthese, der Nanotechnologie), als Schmierstoffe, als Thermofluide, als Gele, als Reagenzien zur organischen Synthese, in der "Green Chemistry" (Ersatz für Volatile Organic Compounds), als Antistatika, in Spezialanwendungen der Analytik (Gaschromatographie, Massenspektroskopie, Kapillarzonenelektrophorese), als Flüssigkristalle, etc. eingesetzt werden. Bei der Anwendung von ionischen Flüssigkeiten mag die Optimierung der Eigenschaften für die jeweilige Anwendung in weiten Grenzen durch eine Variation der Struktur von Anion und Kation bzw. eine Variation ihrer Kombination erfolgen, was den ionischen Flüssigkeiten übrigens ganz allgemein die Bezeichnung "Designer Solvents" (siehe beispielsweise Freemantle, M.; Chem. Eng. News, 78, 2000, 37) eingebracht hat.

Da ionische Flüssigkeiten aus organischen Kationen und organischen oder anorganischen Anionen bestehen, weisen sie eine hohe Konzentration von Ladungsträgern auf und sind somit elektrisch leitend. Ionische Flüssigkeiten sind deshalb ganz außerordentlich gute Mikrowellenempfänger (siehe dazu Martínez-Palou R., Molecular Diversity (2010), 14, (1), 3-25 und Morris R.E., Angewandte Chemie, International Edition (2008), 47, (3), 442-444) mit extrem großen Absorptionskoeffizienten über einen sehr breiten Frequenzbereich. Es wurde nun überraschender Weise gefunden, daß diese hervorragenden Eigenschaften trotz der i.A. hohen bis sehr hohen Viskosität einer typischen Klebstoff-Formulierung vor und während des Klebevorgangs erhalten bleiben, wenn man ionische Flüssigkeiten der Klebstoffformulierung zusetzt. Weiters wurde gefunden, daß selbst ionische Flüssigkeiten mit großen, organischen Ionen - und daher verringerter Ladungsträgerdichte - nur unwesentlich schlechter absorbieren als solche mit kleinen Ionen und höherer Ladungsträgerdichte. Ionische Flüssigkeiten können daher ohne weiteres chemisch funktionalisiert werden, wobei insbesondere jene Funktionalitäten von Interesse sind, welche mit denen des Klebstoffes ident oder analog sind, sodaß die funktionalisierte ionische Flüssigkeit in die ausgehärtete Klebstoffmatrix einbindet und daher kein "Füllstoff' sondern Teil der Matrix ist. Weiters wurde gefunden, daß bereits geringe Mengen an zugesetzter ionischer Flüssigkeit ausreichen, um dem Klebstoff hervorragende Mikrowellen Einkoppelungs-Eigenschaften zu geben, in der Regel genügen dazu bereits wenige Massenprozent.

Mit den nachfolgenden Beispielen werden besondere Ausführungsformen der Erfindung noch näher beschrieben.

### Beispiel 1

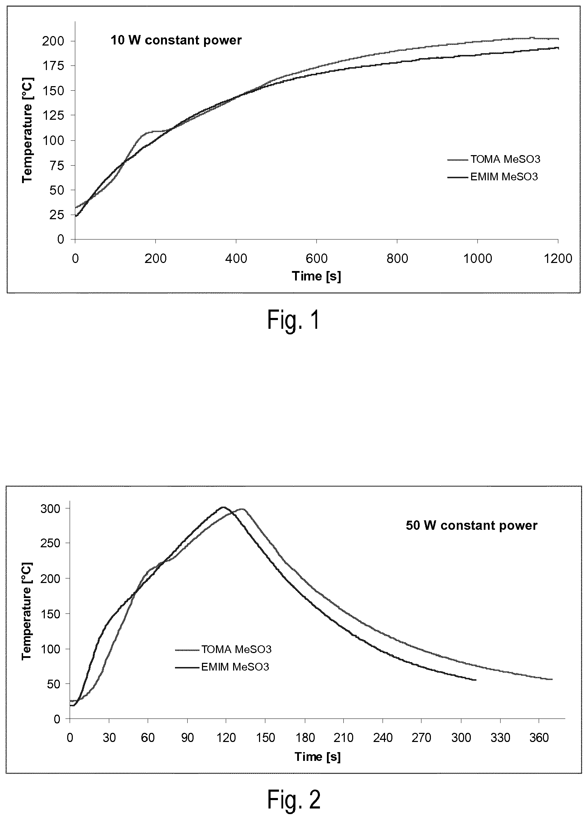

3Gramm der beiden ionischen Flüssigkeiten 1-Ethyl-3-methylimidazolium-methansulfonat ("EMIM-MeSO₃", CAS 145022-45-3, Molmasse 206,3 g/mol) und Methyltrioctylammonium-methansulfonat ("TOMA- MeSO₃", CAS 84679-79-8, Molmasse 463,8 g/mol) wurden unter starkem Rühren in einem 10ml Quarz-Mikrowellengefäß bei 2,45 GHz und konstanter Leistung von 10W und 50W mit Mikrowelle in einem *Anton Paar Monowave 300* bestrahlt. Mittels einer Fiber-Optik-Sonde wurde der Temperatur-Zeitverlauf gemessen, wobei die in Fig. 1 gezeigten Resultate erhalten wurden.

In Fig. 1 ist das Ergebnis der Bestrahlung von je 3 g EMIM-MeSO₃ und TOMA-MeSO₃ bei 10W Mikrowellen-Leistung gezeigt. Die obere Kurve bezieht sich dabei auf TOMA-MeSO₃, die untere auf EMIM-_{MeSO3}.

In der Fig. 2 ist das Ergebnis der Bestrahlung von je 3 g EMIM-MeSO₃ und TOMA-MeSO₃ bei 50W Mikrowellen-Leistung, wobei bei Erreichen von 300°C die Bestrahlung abgebrochen wurde. Die linke Kurve betrifft dabei EMIM-MeSO₃, die rechts davon TOMA-MeSO₃.

Während EMIM-MeSO₃ eine sehr gut wasserlösliche ionische Flüssigkeit mit aromatischem Kation und eher niedriger Viskosität ist (11 mPas @ 100°C), ist TOMA-MeSO₃ rein aliphatisch, hydrophob und zeigt - u.A. auch wegen der großen Molmasse - deutlich höhere Viskosität (83 mPas @ 100°C). Wie aus der Fig. 1 und aus der Fig. 2 ersichtlich ist, zeigen beide ionischen Flüssigkeiten trotz des großen Unterschiedes in ihren Molmassen und Viskositäten nahezu dasselbe hervorragende Mikrowellen-Einkoppelungsverhalten, welches damit also kaum von der Ladungsträgerdichte und der Struktur der Kationen abhängig ist.

### Beispiel 2

Die folgenden drei Proben wurden unter denselben Bedingungen wie im Experiment 1 bei konstanten 50W mit Mikrowelle bestrahlt:
1. 3 ml 1,4-Dioxan
2. 100 mg PE193 (ein Polybutadien mit 30-Gewichtsprozent Kohlenstoff-Partikel) als feines Pulver, suspendiert in 3 ml 1,4-Dioxan;
3.5 mg TOMA-MeSO₃ gelöst in 3ml 1,4-Dioxan

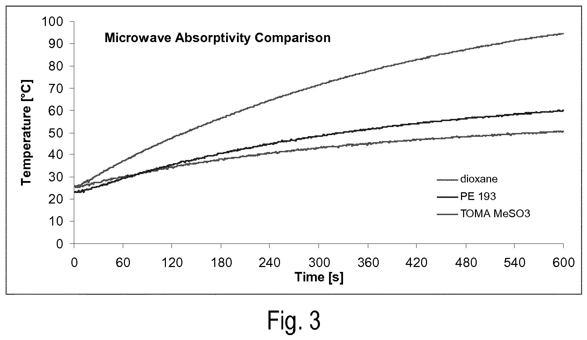

Das 1,4-Dioxan diente dabei als einigermaßen mikrowellentransparentes Lösungs- bzw. Suspensionsmedium, welches in der Lage ist die ionische Flüssigkeit zu lösen. Fig. 3 zeigt die Erwärmungsprofile der drei Proben: Sowohl das Lösungsmittel 1,4-Dioxan als auch das mit Kohlenstoff-Partikeln versetze Polymer zeigen eine mäßige Mikrowellen-Einkoppelung. Im Vergleich zu den 30 mg im Polymer enthaltenen Kohlenstoff-Partikeln verhalten sich nur 5 mg der ionischen Flüssigkeit TOMA-MeSO₃ dagegen völlig anders und führen zu einer deutlich schnelleren Erwärmung. Dies geht aus Fig. 3 hervor, die einen Vergleich der Erwärmungsprofile eines mit Kohlenstoff-Partikeln (Ruß) versetzten Polymers mit einer ionischen Flüssigkeit zeigt. Die oberste Kurve ist dabei dem TOMA-MeSO₃ zugeordnet, die mittlere Kurve dem Pe 193 und die unterste Kurve dem Dioxan.

### Beispiel 3

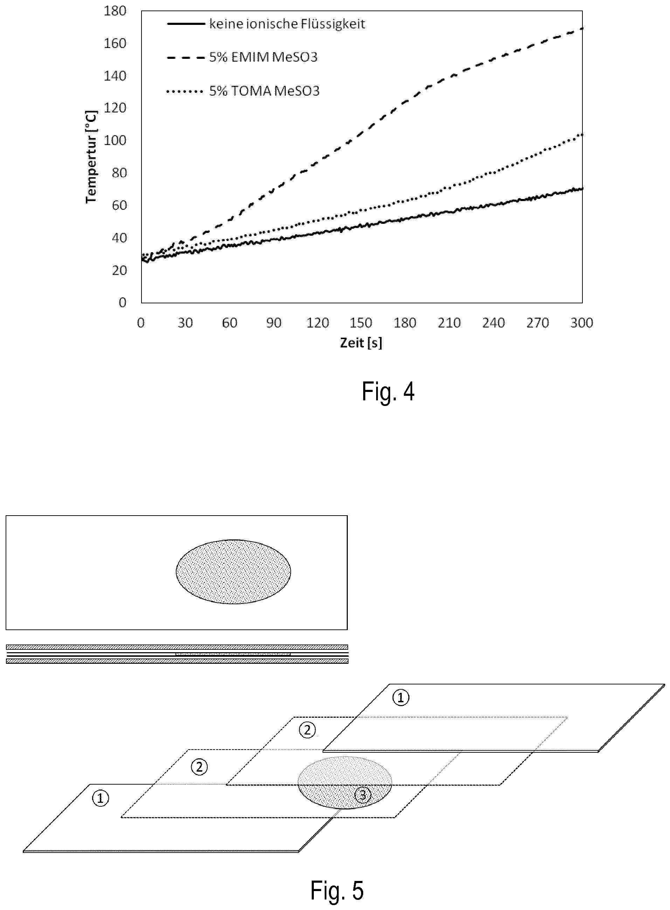

Handelsüblicher Schmelzkleber ("UHU Klebepatronen", Herstellernummer 47865, UHU GmbH & Co. KG) wurde bei 200°C im Trockenschrank verflüssigt und mit 5%w derselben ionischen Flüssigkeiten wie in Beispiel 1 beschrieben (EMIM MeSO₃ und TOMA MeSO₃) homogen vermischt. Die flüssigen Proben wurden in zylindrische 10mL Mikrowellengefäße gefüllt und wieder auf Raumtemperatur abgekühlt. Danach wurden die Proben in einem single-mode Mikrowellengerät (Monowave 300, Anton Paar GmbH) bei einer konstanten Mikrowellenleistung von 50 W über einen Zeitraum von 5 min bestrahlt, die Temperatur wurde an der Außenwand der Mikrowellengefäße mit Hilfe eines IR Sensors gemessen. In Fig. 4 sind die Erwärmungsprofile der einzelnen Bestrahlungsexperimente dargestellt: Nach 5 Minuten betragen die an der Gefäßwand gemessenen Temperaturen 70°C (unbehandelter Schmelzkleber), 170 °C (5%w EMIM MeSO₃) und 105 °C (5%w TOMA MeSO₃). Obwohl der Schmelzkleber auch ohne Additiv durch Mikrowellenstrahlung aufgeheizt werden kann, ist jedoch deutlich ersichtlich, dass die Zugabe von ionischen Flüssigkeiten zu signifikant höheren Heizraten führt. Im Fall von EMIM MeSO₃, das bei Raumtemperatur als Flüssigkeit vorliegt, sind die Heizraten noch schneller als bei TOMA MeSO₃, das erst ab ca. 60 °C zu schmelzen beginnt. Sobald TOMA MeSO₃ geschmolzen ist erhöht sich auch die Heizrate dieser Mischung (siehe Erwärmungsprofil für TOMA MeSO₃ in Fig. 4). Proben, die Mikrowellenstrahlung ausgesetzt werden erwärmen sich durch direkte Interaktionen mit dem Mikrowellenfeld ("in-core heating") was dazu führt, dass die Probe von innen nach außen erwärmt wird. Bei konventionellem Heizen passiert der Wärmeeintrag über eine externe Heizquelle zuerst auf das Probengefäß und erst in weiterer Folge auf die zu beheizende Probe. Deshalb ist davon auszugehen, dass die Temperatur, die an der Außenwand mit einem IR Sensor gemessen wird die tatsächlichen Temperaturbedingungen nur zeitverzögert wiedergeben kann und die Temperatur im Inneren höher ist als außen an der Gefäßwand. Nach den Versuchen mit der Mikrowelle wurden die drei Proben erneut konventionell bei 200°C im Trockenschrank verflüssigt und es wurden Klebeversuche mit Glas (handelsübliche Objektträger für die optische Mikroskopie) und Papier (handelsübliches Kopierpapier) durchgeführt, wobei jeweils einige Tropfen der flüssigen Schmelzkleber zwischen zwei Schichten der Probematerialien aufgetragen wurden, manuell Druck auf die Probematerialien aufgebracht wurde (Anpressen) und wenige Minuten bis zur Abkühlung gewartet wurde. Die haptisch feststellbare Klebekraft des mit ionischer Flüssigkeit behandelten Schmelzklebers zeigte keinen Unterschied im Vergleich zur unbehandelten Originalprobe.

### Beispiel 4

Um das mikrowelleninduzierte Verschweißen thermoplastischer Kunststoffe mittels ionischer Flüssigkeiten zu untersuchen, wurden handelsübliche Vakuum-Siegel-Folien herangezogen, wie sie z.B. zum Abpacken von Lebensmitteln unter Vakkum verwendet werden (thermisches Vakuum-Siegeln, "Vakuumieren"). Hierfür wurde ein Tropfen EMIM MeSO₃ zwischen zwei Folienstücke (75 x 25mm) eingebracht und zwischen mikrowellentransparenten Glasplatten fixiert, um einen gewissen Anpressdruck aufzuprägen und sicherzustellen, daß sich die Folien berühren. Die schematische Darstellung des Versuchsaufbaues ist in Fig. 5 dargestellt (① Glasplatten, ② thermoplastische Kunststoff-Folien, ③ EMIM MeSO₃). Das zu bestrahlende System wurde in einer im freien Handel erhältlichen Haushaltsmikrowelle (Samsung ME711K, Samsung Electronics U.K. Ltd.) bestrahlt, welche bei einer Frequenz von 2450 MHz betrieben wird. Die Mikrowellenleistung des Gerätes kann zwischen 100 und 800 W stufenweise frei gewählt werden, ein Drehteller im Inneren der 20 L Kavität sorgt für eine einigermaßen homogene Verteilung der Mikrowellenstrahlung auf die Proben. In einer ersten Versuchsdurchführung wurden die Folienstücke ohne ionische Flüssigkeit zwischen den beiden Glasplatten in Kontakt gebracht und mit einer Magnetronleistung von 800 W für 150 s Sekunden bestrahlt. Es konnte festgestellt werden, dass die thermoplastischen Folien nicht miteinander verschmolzen waren, obwohl das bestrahlte System als Ganzes leicht erwärmt wurde. In einer weiteren Versuchsdurchführung wurde wie in Fig. 5 dargestellt ein Tropfen EMIM MeSO₃ zwischen die beiden Folien eingebracht, diese durch die beiden Glasplatten in Kontakt gebracht und für nur 30 s bei derselben Mikrowellenleistung wie zuvor (800 W) bestrahlt. Nach der Bestrahlung waren die thermoplastischen Folien genau an der Stelle miteinander verschweißt, an der zuvor der Tropfen ionische Flüssigkeit aufgetragen wurde. Es ist also möglich den Tropfen der ionischen Flüssigkeit innerhalb kürzester Zeit selektiv so stark zu erhitzen, dass die beiden Folienstücke miteinander verschweißt werden. Jene Bereiche der Thermoplaste an denen kein EMIM MeSO₃ aufgetragen wurde bleiben unverändert, also nicht miteinander verschmolzen.

Da es somit möglich ist, die Klebestelle gezielt extrem schnell und quasi "auf Kommando" zu erhitzen ohne das zu klebende, mikrowellentransparente Material zu erwärmen, können auch solche Materialien verklebt werden, die die genannten hohen Temperaturen nicht vertragen würden.

Es müssen nun im Gegensatz zu den weiter oben beschriebenen Partikel-basierten Mikrowellen absorbierenden Materialien keine großen Mengen im mehrfachen 10% Bereich mehr zugesetzt werden, sondern es reichen Mengen im Bereich von 0,01 - 15%w, bevorzugt von 0,01 - 5%w.
Da die meisten ionischen Flüssigkeiten farblos bis schwach gelb sind und in homogener Phase eingebunden werden können, stören Sie das optische Erscheinungsbild im Gegensatz zu den meist schwarzen Partikeln nicht.

Geeignete ionische Flüssigkeiten können chemisch funktionalisiert sein, wobei insbesondere jene Funktionalitäten von Interesse sind, welche mit denen der Klebstoffmonomere ident oder chemisch analog sind, sodass die funktionalisierte ionische Flüssigkeit in die ausgehärtete Klebstoffmatrix einbindet und daher kein "Füllstoff' sondern Teil der Matrix ist und zu deren Festigkeit beiträgt. Solche funktionalisierte ionische Flüssigkeiten können potentiell auch als Klebstoffmonomer in Reaktivklebern verwendet werden, sodass beim Aushärten eine polymere ionische Flüssigkeit entsteht.

Besonders bevorzugte chemische Funktionlisierungen sind -OR^{c}, -SR^{c}, -NR^{c}R^{d}, -COR^{c},-COOR^{c}, -CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin
R^{c} und R^{d} unabhängig voneinander für Wasserstoff, C₁-C₆-Alkyl, C₁-C₆-Halogenalkyl, Cyclopentyl, Cyclohexyl, Phenyl, Tolyl oder Benzyl stehen.

Prinzipiell können den weiter oben beschriebenen Klebstoffen ganz allgemein auch alle Arten von polymeren ionische Flüssigkeiten gemäß vorliegender Erfindung als Mikrowellenempfänger zugesetzt werden, sofern diese im Klebstoffgemisch löslich sind bzw. sich darin gelieren lassen und somit homogen verteilt sind.
Die ionischen Flüssigkeiten können im Klebstoffgemisch gelöst oder geliert sein, kolloidal vorliegen oder emulgiert sein. Sie können auch als Feststoffpartikel suspendiert sein, wenn diese z.B. einen Schmelzpunkt haben, der über der gerade herrschenden Umgebungstemperatur liegt, sich aber während des Klebeprozesses durch Temperaturanstieg verflüssigen. Dieser Temperaturanstieg mag Mikrowellen induziert sein oder konventionell herbeigeführt werden oder von der Reaktionswärme stammen.

Die ionischen Flüssigkeiten können Reinstoffe oder Gemische verschiedener ionischer Flüssigkeiten sein und/oder es können auch zusätzlich organische oder anorganische Salze darin gelöst sein, um z.B. die Ladungsträgerdichte zu erhöhen und das Mikrowellen-Einkoppelungsverhalten zu steigern.

Die ionischen Flüssigkeiten können auch als dünne Schicht zwischen zwei zu verklebenden, thermoplastischen Werkstoffen oder einem zu verklebenden, thermoplastischen Werkstoff und einem anderen Werkstoff aufgetragen bzw. eingebracht oder eingespritzt werden, um die oder den Thermoplasten zum Schmelzen zu bringen und somit einen Verschweißungsprozeß auszuführen.

Bei all den beschriebenen Vorgängen ist der korrekte Anpressdruck der Werkstücke gegeneinander von entscheidender Bedeutung.

Durch die genannten Vorteile ist es möglich mit ionischen Flüssigkeiten oder funktionalisierten ionischen Flüssigkeiten versetzte Klebstoffe "auf Kommando", lokal begrenzt, sehr präzise und sehr schnell auf hohe Temperaturen zu bringen, ohne die ganzen Werkstücke erhitzen zu müssen. Dies schont die Werkstücke, beschleunigt den Klebevorgang, spart Energie und führt bei Reaktivklebstoffen zu höheren Endfestigkeiten. Klebeverbindungen können auch an unzugänglichen Stellen realisiert werden, wenn die Kleber z.B. beim Zusammenbau eines komplexen Werkstückes bereits mit "eingebaut" werden und dann erst später durch Mikrowellenbestrahlung aktiviert werden können. Ein konventionelles Verfahren dieser Art wird z.B. im Automobilbau verwendet ("Punktschweißkleben"), wobei die zu klebenden Teile samt Klebstoff mittels Punktschweißen fixiert werden, dann aber das ganze Werkstück erhitzt werden muß um den Klebevorgang zu aktivieren und die hohe Festigkeit zu erreichen.
*Hot-Melt* Klebeverbindungen können später rasch und schonend gelöst werden, ohne das ganze Werkstück zu erhitzen.

Durch Verwendung eines Mikrowellen-Lasers ("MASER") ist es möglich, den mit ionischer Flüssigkeit ausgestatteten Klebstoff räumlich aufgelöst zu aktivieren und dadurch z.B. 2D und 3D-strukturierte und/oder extrem kleine Klebeverbindungen zu erzeugen.

## Patentansprüche

1. Verfahren zum Aushärten einer polymeren Klebstoffzusammensetzung unter Anwendung von Mikrowellen, **dadurch gekennzeichnet ist, daß** die Klebstoffzusammensetzung eine ionische Flüssigkeit [A]⁺ₐ[B]^{a-} enthält, wobei [A]⁺ für ein Kation, [B]^{a-} für ein Anion und a für eine ganze Zahl steht.

2. Verfahren nach Anspruch 1, **dadurch gekennzeichnet, daß** [A]⁺ für ein Ammonium-Kation [R^{1'}R¹R²R³N]⁺, ein Phosphonium-Kation [R^{1'}R¹R²R³P]⁺, ein Sulfonium-Kation [R^{1'}R¹R²S]⁺, ein heteroaromatisches Kation oder ein Guanidinium Kation R³R^{3'}N(C=NR¹R^{1'})NR²R^{2'} der Formel 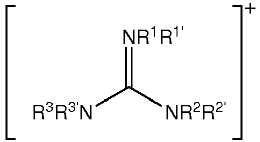
steht, worin R¹,R^{1'},R²,R^{2'} und R³,R^{3'} für Wasserstoff oder organische Reste stehen, z.B. jeweils unabhängig voneinander für Wasserstoff, oder unsubstituiertes Alkyl, Alkenyl, Alkinyl, Cycloalkyl, Cycloalkenyl, Aryl oder gesättigtes oder ungesättigtes Heterocyclyl, wie z.B. Heteroaryl, stehen, wobei die 7 letztgenannten Reste jeweils unabhängig voneinander unsubstituiert oder substituiert sein können durch
ein oder mehr Halogen und/oder 1 bis 3 Reste ausgwählt aus
(C₁-C₆)Alkyl, Aryl, gesättigtes oder ungesättigtes Heterocyclyl, wie Heteroaryl, (C₃₋C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen; oder
zwei der Reste R¹,R^{1'},R²,R^{2'},R³,R^{3'} bilden gemeinsam mit dem Heteroatom, an welches sie gebunden sind, einen gesättigten oder ungesättigten Ring aus, der unsubstituiert oder substituiert ist, und
wobei jede Kohlenstoffkette durch ein oder mehrere Heteroatome ausgewählt aus der Gruppe O, S, NH oder N(C₁-C₄)Alkyl unterbrochen sein kann.

3. Verfahren nach Anspruch 2, **dadurch gekennzeichnet, daß** der Hetrocyclrest ungesättigt ist und insbesondere ausgewählt ist aus einem 5- oder 6-gliedrigen Heteroaromat, der mindestens ein Stickstoffatom sowie gegebenenfalls ein Sauerstoff- oder Schwefelatom aufweist, und der unsubstituiert oder substituiert ist und/oder anneliert ist, insbesondere ausgewählt aus der Gruppe der Formel 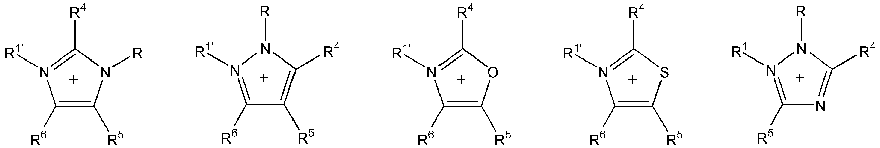 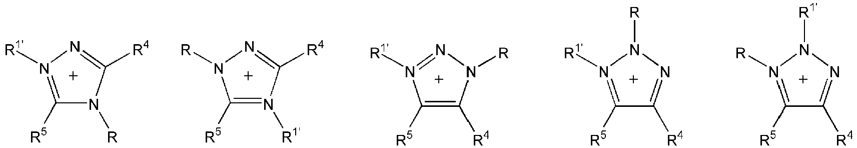 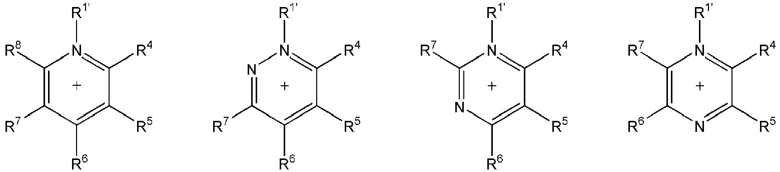 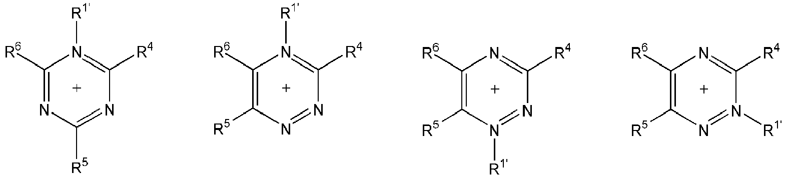 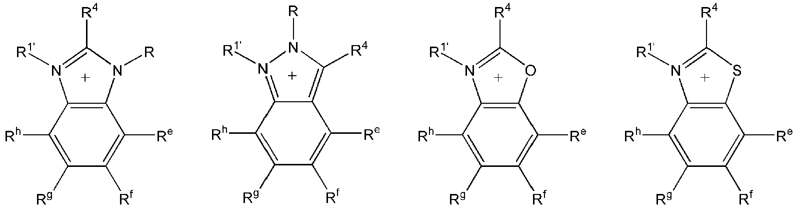 worin
R, R^{1'} unabhängig voneinander Wasserstoff, (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, wobei die 6 letztgenannten Reste jeweils unabhängig voneinander unsubsutituiert sind, oder substitutiert durch
ein oder mehrere Halogenreste, und/oder 1 bis 3 Reste ausgewählt aus der Gruppe (C₁-C₃₀)Alkyl, Aryl, gesättigtes oder ungesättigtes Heterocyclyl, insbesondere Heteroaryl, CC₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan, wobei
R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
R⁴, R⁵, R⁶, R⁷, R⁸ unabhängig voneinander Wasserstoff, Halogen, Nitro, Cyano, OR^{c}, SR^{c}, NR^{c}R^{d}, COR^{c}, COOR^{c}, CO-NR^{c}R^{d}, (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, bedeuten, wobei die 6 letztgenannten Reste jeweils unabhängig voneinander unsubstiuiert sind, oder substituiert durch
ein oder mehre Halogen und/oder 1 bis 3 Reste ausgewählt aus der Gruppe (C₁-C₆)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , wobei R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl,
oder
zwei der Reste R, R⁴, R⁵, R⁶, R⁷, R⁸, welche benachbart sind, bilden gemeinsam mit dem Atom, an welchem sie gebunden sind, einen Ring aus, wobei dieser ungesättigt oder gesättigt, insbsondere aromatisch, unsubstituiert oder substituiert sein kann und wobei die durch die betreffenden Reste gebildete Kohlenstoffkette durch ein oder mehrere Heteroatome ausgewählt aus der Gruppe O, S, N, NH oder N(C₁-C₄)Alkyl unterbrochen sein kann;
R^{e}, R^{f}, R^{g}, R^{h} unabhängig voneinander Wasserstoff, Alkyl-, Alkenyl-, Alkinyl-, Cycloalkyl-, Cycloalkenyl-, Aryl- oder Heteroarylreste, bedeuten, wobei die 7 letztgenannten Reste jeweils unabhängig voneinander ein oder mehrere Halogenreste tragen können und/oder 1 bis 3 Reste ausgewählt aus der Gruppe (C₁-C₆)Alkyl, Aryl, Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , wobei R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl bedeuten.

4. Verfahren nach einem der Ansprüche 1 bis 3, worin [B]^{a-} ausgewählt aus:
- Fluorid, Chlorid, Bromid, Iodid, Dicyanamid, Thiocyanat; Perchlorat, Hexafluorophosphat, Nitrit, Nitrat, Sulfat, Hydrogensulfat, Carbonat, Hydrogencarbonat, Alkylcarbonat, Methylcarbonat, Arylcarbonat; Phosphat; Hydrogenphosphat; Dihydrogenphosphat; Sulfamat H₂N-SO₃⁻, deprotoniertes Acesulfame (6-methyl-2,2-dioxo-oxathiazin-4-olat), deprotoniertes Saccharine (1,1-Dioxo-3-one-1,2-benzothiazolate), Cyclamate (deprotonierte Cyclohexanesulfamidsäure),
- ein tetrasubstituiertes Borat der allgemeinen Formel (Va) [BRⁱR^{j}R^{k}R^{l}]⁻, worin Rⁱ bis R^{l} unabhängig voneinander für Fluor oder (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, wobei die 6 letztgenannten Reste jeweils unabhängig voneinander unsubstituiert sind oder substituiert durch ein oder mehr Halogen und/oder
1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin R^{c} und R^{d} unabhängig voneinander für Wasserstoff, (C₁-C₆)Alkyl, Halo (C₁-C₆)alkyl, Cycloalkyl, insbesondere Cyclopentyl, Cyclohexyl, Phenyl, Tolyl oder Benzyl stehen;
oder
zwei der Reste Rⁱ bis R^{l} bilden gemeinsam mit dem Bor-Atom, an welchem sie gebunden sind einen fünf-, sechs- oder siebengliedrigen Ring aus, wobei dieser gesättigt oder ungesättigt, unsubstituiert oder substituiert sein kann und wobei die durch die betreffenden Reste gebildete Kohlenstoffette durch ein oder mehrere Heteroatome ausgewählt aus der Gruppe O, S, N, NH oder N-C₁-C₄-Alkyl unterbrochen sein kann,
oder
- organisches Sulfonat der allgemeinen Formel (Vb)[R^{m}-SO₃]⁻ oder organisches Sulfat der allgemeinen Formel (Vc)[R^{m}-OSO₃]⁻, worin
R^{m} für (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl steht, wobei die 6 letztgenannten Reste jeweils unabhängig voneinander unsubstituiert sind oder substitutiert durch
ein oder mehr Halogen, und/oder
1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan, worin R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
- Carboxylat der allgemeinen Formel (Vd) [Rⁿ-COO]⁻, worin
Rⁿ für Wasserstoff oder (C₁-C₃₀)(Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, steht, wobei die 6 letztgenannten Reste jeweils unabhängig voneinander unsubstituiert sind, oder substituiert durch
ein oder mehrere Halogen, und/oder
1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan, worin R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
oder
- Carboxylat, welches formal durch Deprotonierung einer oder gegebenenfalls auch mehrerer Carbonsäuregruppen aus Fruchtsäuren, Zuckersäuren, Aminosäuren, Fettsäuren, flüchtigen Säuren und Harzsäuren abstammt bzw. welches zu diesen Säuren konjugiert ist;
- ein (Fluoralkyl)fluorphosphat der allgemeinen Formel (Ve) [PFₓ(C_{y}F_{2y+1-z}H_{z})₆₋ₓ]⁻, wobei 1≤x≤6, 1≤y≤8 und 0≤z≤2y+1;
oder
- ein Imid der allgemeinen Formeln (Vf) [R^{o}-SO₂-N-SO₂-R^{p}]⁻, (Vg) [R^{q}-SO₂-N-CO-R^{r}]⁻ oder (Vh) [R^{s}-CO-N-CO-R^{t}]⁻, worin
R^{o} bis R^{t} unabhängig voneinander für Wasserstoff oder (C₁-C₃₀)Alkyl, (C₃-C₁₂)Cycloalkyl, (C₂-C₃₀)Alkenyl, (C₃-C₁₂)Cycloalkenyl, Aryl oder gesättigtes oder ungesättigtes Heterocyclyl, insbesondere Heteroaryl, steht, wobei die 6 letztgenannten Reste jeweils unabhängig voneinander unsubstituiert sind oder substituiert durch
ein oder mehrere Halogen und/oder
1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin R^{c} und R^{d} unabhängig voneinander für Wasserstoff, (C₁-C₆)Alkyl, Halo(C₁-C₆)alkyl, Cycloalkyl, insbesondere Cyclopentyl, Cyclohexyl, Phenyl, Tolyl oder Benzyl stehen;
- ein organisches Phosphat der allgemeinen Formel (Vi) [R^{u}-OPO₃]²⁻ oder (Vj) [R^{u}O-PO₂-OR^{v}]⁻ oder organisches Phosphonat der allgemeinen Formel (Vk) [R^{u}-PO₃]²⁻ oder (V1) [R^{u}-PO₂-OR^{v}]⁻, worin
R^{u} und R^{v} unabhängig voneinander für Wasserstoff oder (C₁-C₃₀)Alkyl, (C₃-C₁₂)Cycloalkyl, (C₂-C₃₀)Alkenyl, (C₃-C₁₂)Cycloalkenyl, Aryl oder Heteroaryl stehen, wobei die 6 letztgenannten Reste jeweils unabhängig voneinander unsubstituiert oder substituiert sind durch
ein oder mehr Halogen und/oder
1 bis 3 Reste ausgewählt aus der Gruppe (C₁-C₃₀)Alkyl, Aryl, gesättigtes oder ungesättigtes Heterocyclyl, insbesondere Heteroaryl, (C₃-C₇)Cycloalkyl, Halogen, OR^{c}, SR^{c}, NR^{c}R^{d}, COR^{c}, COOR^{c}, CO-NR^{c}R^{d}, Acrylat, Methacrylat, Cyanacrylat, Epoxid, Vinyl, Vinylether, Vinylester, Styrol, Allyl, Phenol, Alkylphenol, Keton, Amidoamin, Harnstoff, Urethan, Imidazol, Benzimidazol, Isocyanat, Dicarbonsäureanhydrid, Resorcin, Melamin, Siloxan, Alkoxysiloxan , worin R^{c} und R^{d} unabhängig voneinander für Wasserstoff, C₁-C₆-Alkyl, C₁-C₆-Halogenalkyl, Cyclopentyl, Cyclohexyl, Phenyl, Tolyl oder Benzyl stehen.

5. Verfahren nach einem der Ansprüche 1 bis 4, worin Anion [B]^{a-} ein Komplex aus einem zentralen Metallatom M^{+v} der Oxidationszahl v = 1,2,3,4,5 oder 6 und Liganden X⁻, z.B. ein Komplex der allgemeinen Formel [M^{+v}Xᵥ₊₁]⁻ (Vm) oder [M^{+v}Xᵥ₊₂]²⁻ (Vn) oder [M^{+v}Xᵥ₊₃]³⁻(Vo), worin
M^{+v}, ausgewählt ist aus den Elementen der Übergangsmetalle,
insbesondere ausgewählt aus den Elementen Ag, Al, Ce, Cs, Cr, Co, Cu, Dy, Er, Eu, Gd, Ho, Ir, Fe, Mn, Mo, Nd, Ni, Pt, Pr, Re, Rh, Rb, Ru, Sm, Sn, Ta, Tb, Tm, Ti, W, V und Y, insbesondere in den Oxidationsstufen Ag⁺, Al⁺³, Ce⁺², Ce⁺³, Ce⁺⁴, Cs⁺¹, Cr⁺², Cr⁺³, Cr⁺⁶, Co⁺², Co⁺³, Cu⁺¹, Cu⁺², Dy⁺³, Er⁺², Eu⁺³, Eu⁺³, Gd⁺², Gd⁺³, Ho⁺², Ho⁺³, Ir⁺⁴, Fe⁺², Fe⁺³, Mn⁺², Mn⁺³, Mo⁺², Mo⁺¹, Mo⁺⁴, Mo⁺⁵, Nd⁺², Nd⁺³, Ni⁺², Ni⁺³, Pt⁺⁴, Pr⁺², Pr⁺³, Re⁺⁴, Re⁺⁵, Re⁺⁶, Rh⁺², Rh⁺³ Rb⁺⁴, Ru⁺³, Ru⁺⁴, Sn⁺², Sn⁺⁴, Sm⁺², Sm⁺³, Ta⁺⁵, Tb⁺³, Tm⁺³, Ti⁺², Ti⁺³, W⁺⁴, W⁺⁵, V⁺², V⁺³, V⁺⁴, V⁺⁵, Y⁺² und Y⁺³, worin
jeder einzelne der Liganden X voneinander unabhängig insbesondere ausgewählt ist aus: Fluorid, Chlorid, Bromid, Iodid, Thiocyanat, Dicyanamid, Nitrit; Nitrat; Acetylaceton; Acyl; Adenin; 2,2'-Azobisisobutyronitril; Alanin; Allyl; Allyloxycarbonyl; Wasser; Aryl; Arginin; Asparagin; Aspartat; BIABN; Biotinyl; 2,2'-bis(diphenyl-phosphino)-6,6'-dimethoxy-1,1'-biphenyl; 2,2'-Binaphtyldiphenyldiphosphin; 1,2-Bis[4,5-dihydro-3H-binaphtho[1,2-c:2',1'-e]phosphepino]benzen; 1,1'-Bis{4,5-dihydro-3H-dinaphtho[1,2-c: 2',1'-elphosphepino}ferrocen; 4,4'-Di-tert-butyl-4,4',5,5'-tetrahydro-3,3-bis-3H-di-naphtho[2,1-c:1',2'-e]phosphepin; BINAL; 4,5-Dihydro-3H-dinaphtho[2,1-c;1',2'-e]phosphepin; 2,2'-Binaphtyldiol; Bis-tert-butyl-bipyridin; Benzylmethylphenylphosphin; Benzyl; tert-Butoxycarbonyl; Bis(2-((S)-4-iso-propyl-4,5-dihydrooxazol-2-yl)phenyl)amin; Bis(2-((S)-4-tert-butyl-4,5-dihydrooxazol-2-yl)phenyl)amin; 1,2-Bis(2,5-diethyl-phospholano)-ethan; Butoxy-carbonyl-4-diphenylphosphino-2-diphenylphosphino-methyl-pyrrolidin; 2,2'-Bipyridin; Benzoyl; Benzyloxycarbonyl; CO; Cycloheptatrienyl; Citrullin; Citrat; Cyanid; Cyclooctadien; Cyclooctatetraen; Cyclopentadienyl; Pentamethylcyclopentadienyl; Cyclohexyl; Cytidin; Cystein; Cytosin; Dibenzilidenaceton; O-Isopropyliden-2,3-dihydroxy-1,4-bis(diphenylphosphino)butan; (1R,2R)-Bis[(2-methoxyphenyl)phenyl-phosphino]ethan; 4-Dimethylaminopyridin; Dimethylglyoxim Dipivaloylmethanat; Dess-Martin-Periodinan; 1,4,7,10-Tetraaza-cyclododecan-1,4,7,10-tetraacetat; Diphenylphosphenylethan; Diphenylphosphenylmethan; Diphenylphosphenylpropan; desoxy-Ribose; Diethylentriamin-Pentaacetat; Bis(2,5-dimethylphospholano)-benzene; Ethylendiamintetraacetat; Ethylendiamin; Fluorenylmethoxycarbonyl; 7,7-dimethyl-1,1,1,2,2,3,3-heptafluorooctan-4,6-dionato; Galactose; Galactosamin; N-Acetylgalactosamin, Glycolyl; Glucose; Glucosamin, N-Acetyl-Glucosamin, Glutamin, Glutamat, Glycin, Guanin; Guanosin; Hämoglobin; Hexafluoroacetylacetonat; Histidin; Hexamethylphosphorsäuretriamid; Hydroxyprolin; Isoleucin; Leucin; Lysin; 2,2'-Bis[(N,N-dimethylamino)(phenyl)methyl]-1,1'-bisdicyclohexyl-phosphino)ferrocen; Myoglobin; Methionin; Methämoglobin; Metmyoglobin; 3,5-Dioxa-4-phosphacyclohepta[2,1-a;3,4-a']dinapthalen-4-yl)dimethylamin; Methylphenyln-propyl phosphin; Methylsulfon; Bicyclo[2.2.1]hepta-2,5-; Neuraminsäure; N-Acetyl-Neuraminsäure; N-Glycolyl-Neuraminsäure; 2,3-Bis(diphenylphosphino)-bicyclo[2.2.1]hept-5-en; Nitrilo-triessigsäure; Ornithin; Succinat; Oxalat; Phenyl o-anisylmethylphosphin; Phthalocyanin; Phenylalanin; Phenanthrolin; Picolylamin; Piperidin; para-Nitro-Benzoesäure; Porphyrin; Prolin; Pyridyl; PYBOX; Pyroglutamat; Pyrazin; Ribose; Sarcosin; Salen; Serin; Succinyl; 1,4,7-Triazacyclononan; tert-butyl-di-methyl-silyl; Tartrat; Terpyridin; Thymidin; Threonin; Thymin; Tetramethylethylendiamin; Trimesinsäure; Tris(pyrazolyl)borat; Triphenylphosphan; Tryptophan; Tyrosin; Tetrazol; Ubiquitin; Uracil; Uridin; Valin.

6. Verfahren nach einem der Ansprüche 1 bis 5, worin
- definierte, Kohlenstoff enthaltende organische, gesättigte oder ungesättigte, acyclische oder cyclische, aliphatische, aromatische oder araliphatische Reste 1 bis 30 Kohlenstoffatome enthalten,
- die Reste Rⁱ bis R^{l} beim tetrasubstituierten Borat (Va), der Rest R^{m} beim organischen Sulfonat (Vb) und Sulfat (Vc), der Rest Rⁿ beim Carboxylat (Vd), die Reste R^{o} bis R^{t} bei dem (Fluoralkyl)fluorphosphat (Ve), den Imiden (Vf),(Vg) und (Vh), die Reste R^{u} und R^{v} bei den organischen Phosphaten (Vi),(Vj) und den organischen Phosphonaten (Vk),(Vl) unabhängig voneinander bevorzugt bedeuten:
(C₁-C₃₀)Alkyl und deren aryl-, heteroaryl-, cycloalkyl-, halogen-, hydroxy-, amino-, carboxy-, formyl-, -O-, -CO-, - CO-O- oder -CO-N< substituierte Komponenten, insbesondere
Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder CₙF_{2(n-a)+(1-b)}H_{2a+b} mit n ≤30, 0≤a≤n und b = 0 oder 1 (beispielsweise CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅);
(C₃-C₁₂)Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder CₙF_{2(n-a)-(1-b)}H_{2a-b} mit n ≤30, 0≤a≤n und b = 0 oder 1;
(C₂-C₃₀)Alkenyl und deren aryl-, heteroaryl-, cycloalkyl-, halogen-, hydroxy-, amino-, carboxy-, formyl-, -O-, -CO- oder -CO-O-substituierte Komponenten, insbesondere 2-Propenyl, 3-Butenyl, cis-2-Butenyl, trans-2-Butenyl oder CₙF_{2(n-a)-(1-b)}H_{2a-b} mit n ≤30, 0≤ a≤n und b = 0 oder 1;
(C₃-C₁₂)Cycloalkenyl und deren aryl-, heteroaryl-, cycloalkyl-, halogen-, hydroxy-, amino-, carboxy-, formyl-, -O-, -CO- oder -CO-O-substituierte Komponenten, insbesondere 3-Cyclopentenyl, 2-Cyclohexenyl, 3-Cyclohexenyl, 2,5-Cyclohexadienyl oder CₙF_{2(n-a)-3(1-b)}H_{2a-3b} mit n ≤30, 0≤a≤n und b = 0 oder 1;
Aryl oder gesättigtes oder ungesättigtes Heterocyclyl, insbesondere Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, insbesondere
Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0≤a≤5.

7. Verfahren nach einem der Ansprüche 1 bis 6, **dadurch gekennzeichnet, dass** den ionischen Flüssigkeiten 5 - 95 Gew.% Metallsalze [M]ₓ^{b+}[B]_{y}^{a-}, wobei a,b,x,y voneinander unabhängig die Zahlen 1,2,3 oder 4 bedeuten und wobei das Produkt aus x und b gleich dem Produkt aus y und a ist, zugesetzt sind,
wobei insbesondere die Metallkationen aus Cr⁺², Cr⁺³, Co⁺², Co⁺³, Cu⁺¹, Cu⁺², Fe⁺², Fe⁺³, Mn⁺², Mn⁺³,Ni⁺², Ni⁺³, Ti⁺², Ti⁺³, Li⁺, Na⁺, K⁺, Cs⁺, Mg²⁺, Ca²⁺, Ba², Sr²⁺, Zr⁴⁺, Sn²⁺, Sn⁴⁺, Ag⁺, Zn²⁺ und Al³⁺, besonders bevorzugte sind Co⁺², Co⁺³, Cu⁺¹, Cu⁺², Fe⁺², Fe⁺³, Mn⁺², Mn⁺³, Ti⁺², Ti⁺³, Li⁺, Na⁺, K⁺, Mg²⁺, Ca²⁺, Zn²⁺ und Al³⁺ ausgewählt sind.

## Claims

1. A method for curing a polymer adhesive composition using microwaves, **characterized in that** the adhesive composition contains an ionic liquid [A]⁺ₐ[B]^{a-}, where [A]⁺ represents a cation, [B]^{a-} represents an anion and a represents an integer.

2. A method according to claim 1, **characterized in that** [A]⁺ represents an ammonium cation [R¹R¹R²R³N]⁺, a phosphonium cation [R^{1'}R¹R²R³P]⁺, a sulfonium cation [R^{1'}R¹R²S]⁺, a hetero-aromatic cation or a guanidinium cation R³R^{3'}N(C=NR¹R^{1'})NR²R^{2'} of the formula 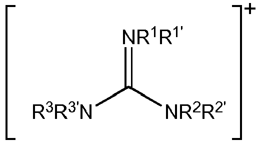
where R¹,R^{1'},R²,R^{2'} and R³,R^{3'} represent hydrogen or organic residues, e.g., independently of each other hydrogen, or unsubstituted alkyl, alkenyl, alkinyl, cycloalkyl, cycloalkenyl, aryl or saturated or unsaturated heterocyclyl, e.g., heteroaryl, wherein the 7 residues mentioned last, independently of each other, may be unsubstituted or substituted by one or more halogen and/or 1 to 3 residues selected from (C₁-C₆)alkyl, aryl, saturated or unsaturated heterocyclyl, e.g., heteroaryl, (C₃-C₇)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein R^{c} and R^{d} independently of each other represent hydrogen, (C₁-C₆)alkyl, halo(C₁-C₆)alkyl, cycloalkyl, in particular cyclopentyl, cyclohexyl, phenyl, tolyl or benzyl; or wherein two of the residues R¹,R^{1'},R²,R^{2'},R³,R^{3'} together with the hetero atom, to which they are bound, form a saturated or unsaturated ring, which is unsubstituted or substituted, and
wherein each carbon chain may be disrupted by one or several hetero atoms selected from the group consisting of O, S, NH or N(C₁-C₄)alkyl.

3. A method according to claim 2, **characterized in that** the heterocycyl residue is unsaturated and in particular selected from a 5- or 6-membered hetero-aromatic, which has at least one nitrogen atom as well as optionally an oxygen or sulphur atom and which is unsubstituted or substituted and/or annulated,
in particular selected from the group of the formula 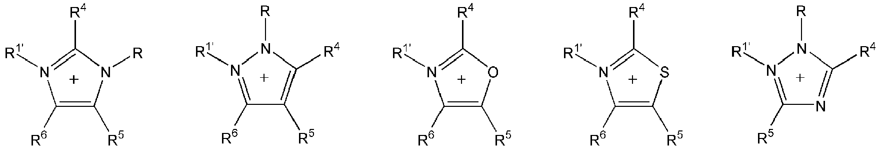 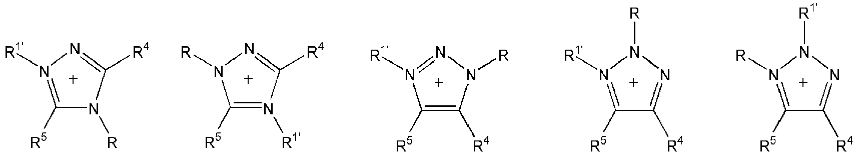 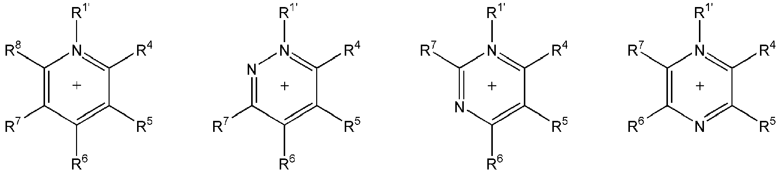 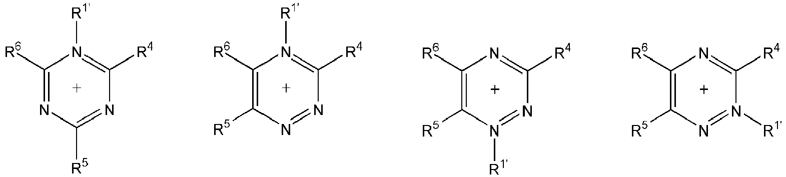 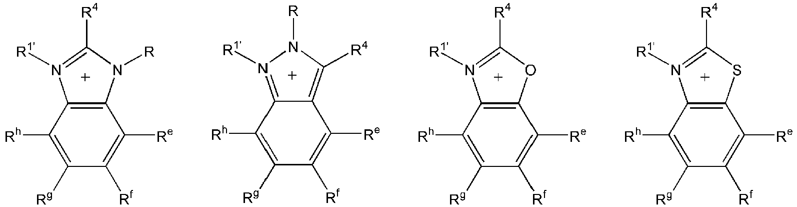 wherein
R, R^{1'} independently of each other represent hydrogen, (C₁-C₃₀)alkyl, (C₃-C₁₂)cycloalkyl, (C₂-C₃₀)alkenyl, (C₃-C₁₂)cycloalkenyl, aryl or saturated or unsaturated heterocyclyl, in particular heteroaryl, wherein the 6 residues last mentioned are each independently of each other unsubstituted or substituted by
one or several halogen residues, and/or 1 to 3 residues selected from the group consisting of (C₁-C₃₀)alkyl, aryl, saturated or unsaturated heterocyclyl, in particular heteroaryl, (C₃-C₇)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein
R^{c} and R^{d} independently of each other represent hydrogen, (C₁-C₆)alkyl, halo(C₁-C₆)alkyl, cycloalkyl, in particular cyclopentyl, cyclohexyl, phenyl, tolyl or benzyl;
R⁴, R⁵, R⁶, R⁷, R⁸ independently of each mean hydrogen, halogen, nitro, cyano, OR^{c}, SR^{c}, NR^{c}R^{d}, COR^{c}, COOR^{c}, CO-NR^{c}R^{d}, (C₁-C₃₀)alkyl, (C₃-C₁₂)cycloalkyl, (C₂-C₃₀)alkenyl, (C₃-C₁₂)cycloalkenyl, aryl or saturated or unsaturated heterocyclyl, in particular heteroaryl, wherein the 6 residues last mentioned are each independently of each unsubstituted or substituted by
one or several halogen and/or 1 to 3 residues selected from the group consisting of (C₁-C₆)alkyl, aryl, saturated or unsaturated heterocyclyl, in particular heteroaryl, (C3-C7)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein R^{c} and R^{d} independently of each other represent hydrogen, (C₁-C₆)alkyl, halo(C₁-C₆)alkyl, cycloalkyl, in particular cyclopentyl, cyclohexyl, phenyl, tolyl or benzyl,
or
two of the residues R, R⁴, R⁵, R⁶, R⁷, R⁸, which are adjacent to each other, form together with the atom, to which they are bound, a ring, wherein this may be unsaturated or saturated, in particular aromatic, unsubstituted or substituted and wherein the carbon chain formed by the respective residues may be disrupted by one or several heteroatoms selected from the group consisting of O, S, N, NH or N(C₁-C₄)alkyl;
R^{e}, R^{f}, R^{g}, R^{h} independently of each other mean hydrogen, alkyl, alkenyl, alkinyl, cycloalkyl, cycloalkenyl, aryl or heteroaryl residues, wherein the 7 residues last mentioned independently of each other may support one or several halogen residues and/or 1 to 3 residues selected from the group consisting of (C₁-C₆)alkyl, aryl, heteroaryl, (C3-C7)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein R^{c} and R^{d} independently of each other mean hydrogen, (C₁-C₆)alkyl, halo(c₁-c₆)alkyl, cycloalkyl, in particular cyclopentyl, cyclohexyl, phenyl, tolyl or benzyl.

4. A method according to any of claims 1 to 3, wherein [B]^{a-} is selected from:
- fluoride, chloride, bromide, iodide, dicyanamide, thiocyanate; perchlorate, hexafluorophosphate, nitrite, nitrate, sulphate, hydrogen sulphate, carbonate, hydrogen carbonate, alkyl carbonate, methyl carbonate, aryl carbonate; phosphate; hydrogen phosphate; dihydrogen phosphate; sulfamate H₂N-SO₃⁻, deprotonated acesulfame (6-methyl-2,2-dioxo-oxathiazine-4-olate), deprotonated saccharine (1,1-dioxo-3-one-1,2-benzothiazolate), cyclamate (deprotonated cyclohexane sulfamic acid),
- a tetra-substituted borate of the general formula (Va) [BRⁱR^{j}R^{k}R^{l}]⁻, wherein Rⁱ to R^{l} independently of each other represent fluoro or (C₁-C₃₀)alkyl, (C₃-C₁₂)cycloalkyl, (C₂-C₃₀)alkenyl, (C₃-C₁₂)cycloalkenyl, aryl or saturated or unsaturated heterocyclyl, in particular heteroaryl, wherein the 6 residues last mentioned independently of each other are unsubstituted or substituted by
one or several halogen and/or
1 to 3 residues selected from the group consisting of (C₁-C₃₀)alkyl, aryl, saturated or unsaturated heterocyclyl, in particular heteroaryl, (C₃-C₇)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein
R^{c} and R^{d} independently of each other represent hydrogen, (C₁-C₆)alkyl, halo (C₁-C₆)alkyl, cycloalkyl, in particular cyclopentyl, cyclohexyl, phenyl, tolyl or benzyl; or
two of the residues Rⁱ to R^{l} form together with the boron atom, to which they are bound, a five-, six- or seven-membered ring, wherein this may be saturated or unsaturated, unsubstituted or substituted and wherein the carbon chain formed by the respective carbon atoms may be disrupted by one or several heteroatoms selected from the group consisting of O, S, N, NH or N-C₁-C₄-alkyl,
or
- organic sulfonate of the general formula (Vb)[R^{m}-SO₃]⁻ or organic sulphate of the general formula (Vc)[R^{m}-OSO₃]⁻, wherein
R^{m} represents (C₁-C₃₀)alkyl, (C₃-C₁₂)cycloalkyl, (C₂-C₃₀)alkenyl, (C₃-C₁₂)cycloalkenyl, aryl or saturated or unsaturated heterocyclyl, in particular heteroaryl, wherein the 6 residues mentioned last independently of each other are unsubstituted or substituted by
one or several halogen, and/or
1 to 3 residues selected from the group consisting of (C₁-C₃₀)alkyl, aryl, saturated or unsaturated heterocyclyl, in particular heteroaryl, (C₃-C₇)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein
R^{c} and R^{d} independently of each other represent hydrogen, (C₁-C₆)alkyl, halo(Ci-C₆)alkyl, cycloalkyl, in particular cyclopentyl, cyclohexyl, phenyl, tolyl or benzyl;
- carboxylate of the general formula (Vd) [Rⁿ-COO]⁻, wherein
Rⁿ represents hydrogen or (C₁-C₃₀)alkyl, (C₃-C₁₂)cycloalkyl, (C₂-C₃₀)alkenyl, (C₃-C₁₂)cycloalkenyl, aryl or saturated or unsaturated heterocyclyl, in particular heteroaryl, wherein the 6 residues mentioned last independently of each other are unsubstituted or substituted by
one or several halogen, and/or
1 to 3 residues selected from the group consisting of the group (C₁-C₃₀)alkyl, aryl, saturated or unsaturated heterocyclyl, in particular heteroaryl, (C₃-C₇)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein
R^{c} and R^{d} independently of each other represent hydrogen, (C₁-C₆)alkyl, halo(Ci-C₆)alkyl, cycloalkyl, in particular cyclopentyl, cyclohexyl, phenyl, tolyl or benzyl;
or
- carboxylate, which formally is derived by way of deprotonation of one or optionally also several carboxylic acid groups of fruit acids, saccharic acids, amino acids, fatty acids, volatile acids and resin acids or which is conjugated into these acids, respectively;
- a (fluoroalkyl)fluorophosphate of the general formula (Ve) [PFₓ(C_{y}F_{2y+1-z}H_{z})₆₋ₓ]⁻, wherein 1 ≤x ≤6, 1 ≤y ≤8 and 0 ≤z ≤ 2y+1;
or
- an imide of the general formulae (Vf) [R^{o}-SO₂-N-SO₂-R^{p}]⁻, (Vg) [R^{q}-SO₂-N-CO-R^{r}]⁻ or (Vh) [R^{s}-CO-N-CO-R^{t}]⁻, wherein
R^{o} to R^{t} independently of each other represent hydrogen or (C₁-C₃₀)alkyl, (C₃-C₁₂)cycloalkyl, (C₂-C₃₀)alkenyl, (C₃-C₁₂)cycloalkenyl, aryl or saturated or unsaturated heterocyclyl, in particular heteroaryl, wherein the 6 residues mentioned last independently of each other are unsubstituted or substituted by
one or several halogen and/or
1 to 3 residues selected from the group consisting of (C₁-C₃₀)alkyl, aryl, saturated or unsaturated heterocyclyl, in particular heteroaryl, (C₃-C₇)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein
R^{c} and R^{d} independently of each other represent hydrogen, (C₁-C₆)alkyl, halo(Ci-C₆)alkyl, cycloalkyl, in particular cyclopentyl, cyclohexyl, phenyl, tolyl or benzyl;
- an organic phosphate of the general formula (Vi) [R^{u}-OPO₃]²⁻ or (Vj) [R^{u}O-PO₂-OR^{v}]⁻ or an organic phosphonate of the general formula (Vk) [R-PO₃]²⁻ or (VI) [R^{u}-PO₂-OR^{v}]⁻, wherein
R^{u} and R^{v} independently of each other represent hydrogen or (C₁-C₃₀)alkyl, (C₃-C₁₂)cycloalkyl, (C₂-C₃₀)alkenyl, (C₃-C₁₂)cycloalkenyl, aryl or heteroaryl, wherein the 6 residues mentioned last independently of each other are unsubstituted or substituted by
one or several halogen and/or
1 to 3 residues selected from the group consisting of (C₁-C₃₀)alkyl, aryl, saturated or unsaturated heterocyclyl, in particular heteroaryl, (C₃-C₇)cycloalkyl, halogen, OR^{c}, SR^{c}, NR^{c}R^{d}, COR^{c}, COOR^{c}, CO-NR^{c}R^{d}, acrylate, methacrylate, cyanoacrylate, epoxide, vinyl, vinyl ether, vinyl ester, styrene, allyl, phenol, alkyl phenol, ketone, amidoamine, urea, urethane, imidazole, benzimidazole, isocyanate, dicarboxylic acid anhydride, resorcinol, melamine, siloxane, alkoxy siloxane, wherein
R^{c} and R^{d} independently of each other represent hydrogen, C₁-C₆-alkyl, C₁-C₆-halogenalkyl, cyclopentyl, cyclohexyl, phenyl, tolyl or benzyl.

5. A method according to any of claims 1 to 4, wherein anion [B]^{a-} is a complex of a central metal atom M^{+v} of the oxidation number v = 1,2,3,4,5 or 6 and ligands X⁻, e.g., a complex of the general formula [M^{+v}Xᵥ₊₁]⁻ (Vm) or [M^{+v}Xᵥ₊₂]²⁻(Vn) or [M^{+v}Xᵥ₊₃]³⁻(Vo), wherein M^{+v} is selected from the elements of the transition metals,
in particular selected from the elements Ag, Al, Ce, Cs, Cr, Co, Cu, Dy, Er, Eu, Gd, Ho, Ir, Fe, Mn, Mo, Nd, Ni, Pt, Pr, Re, Rh, Rb, Ru, Sm, Sn, Ta, Tb, Tm, Ti, W, V and Y, in particular in the oxidation states Ag⁺, Al⁺³, Ce⁺², Ce⁺³, Ce⁺⁴, Cs⁺¹, Cr⁺², Cr⁺³, Cr⁺⁶, Co⁺², Co⁺³, Cu⁺¹, Cu⁺², Dy⁺³, Er⁺², Eu⁺³, Eu⁺³, Gd⁺², Gd⁺³, Ho⁺², Ho⁺³, Ir⁺⁴, Fe⁺², Fe⁺³, Mn⁺², Mn⁺³, Mo⁺², Mo⁺³, Mo⁺⁴, Mo⁺⁵, Nd⁺², Nd⁺³, Ni⁺², Ni⁺³, Pt⁺⁴, Pr⁺², Pr⁺³, Re⁺⁴, Re⁺⁵, Re⁺⁶, Rh⁺², Rh⁺³, Rb⁺⁴, Ru⁺³, Ru⁺⁴, Sn⁺², Sn⁺⁴, Sm⁺², Sm⁺³, Ta⁺⁵, Tb⁺³, Tm⁺³, Ti⁺², Ti⁺³, W⁺⁴, W⁺⁵, V⁺², V⁺³, V⁺⁴, V⁺⁵, Y⁺² and Y⁺³, wherein
each individual of the ligands X is independently of each other selected in particular from: fluoride, chloride, bromide, iodide, thiocyanate, dicyanamide, nitrite; nitrate; acetyl acetone; acyl; adenine; 2,2'-azobisisobutyronitrile; alanine; allyl; allyloxycarbonyl; water; aryl; arginine; asparagine; aspartate; BIABN; biotinyl; 2,2'-bis(diphenyl-phosphino)-6,6'-dimethoxy-1,1'-biphenyl; 2,2'-binaphtyldiphenyldiphosphine; 1,2-bis[4,5-dihydro-3H-binaphtho[1,2-c:2',1'-e]phosphepino]benzol; 1,1'-bis{4,5-dihydro-3H-dinaphtho[1,2-c:2',1'-e]phosphepino}ferrocene; 4,4'-di-tert-butyl-4,4',5,5'-tetrahydro-3,3'-bis-3H-di-naphtho[2,1-c:1',2'-e]phosphepine; BINAL; 4,5-dihydro-3H-dinaphtho[2,1-c;1',2'-e]phosphepine; 2,2'-binaphtyldiol; bis-tert-butyl-bipyridine; benzylmethylphenylphosphine; benzyl; tert-butoxycarbonyl; bis(2-((S)-4-iso-propyl-4,5-dihydrooxazol-2-yl)phenyl)amine; bis(2-((S)-4-tert-butyl-4,5-dihydrooxazol-2-yl)phenyl)amine; 1,2-bis(2,5-diethyl-phospholano)-ethane; butoxy-carbonyl-4-diphenylphosphino-2-diphenylphosphino-methyl-pyrrolidine; 2,2'-bipyridin; benzoyl; benzyloxycarbonyl; CO; cycloheptatrienyl; citrulline; citrate; cyanide; cyclooctadiene; cyclooctatetraene; cyclopentadienyl; pentamethylcyclopentadienyl; cyclohexyl; cytidine; cysteine; cytosine; dibenzilidenacetone; O-isopropylidene-2,3-dihydroxy-1,4-bis(diphenylphosphino)butane; (1R,2R)-bis[(2-methoxyphenyl)phenyl-phosphino] ethane; 4-dimethylamino pyridine; dimethylglyoxime, dipivaloyl methanate; Dess-Martin periodinane; 1,4,7,10-tetraaza-cyclododecane-1,4,7,10-tetraacetate; diphenylphosphenylethane; diphenylphosphenyl methane; diphenylphosphenyl propane; desoxy ribose; diethylentriamine-pentaacetate; bis(2,5-dimethylphospholano)-benzol; ethylene diamintetraacetate; ethylene diamine; fluorenyl methoxycarbonyl; 7,7-dimethyl-1,1,1,2,2,3,3-heptafluorooctan-4,6-dionato; galactose; galactosamine; N-acetyl galactosamine, glycolyl; glucose; glucosamine, N-acetyl-glucosamine, glutamine, glutamate, glycine, guanine; guanosine; haemoglobin; hexafluoroacetyl acetonate; histidine; hexamethyl phosphoric acid triamide; hydroxyproline; isoleucine; leucine; lysine; 2,2'-bis[(N,N-dimethylamino)(phenyl)methyl]-1,1'-bisdicyclohexyl-phosphino)ferrocene; myoglobin; methionine; methaemoglobin; metmyoglobin; 3,5-dioxa-4-phosphacyclohepta[2,1-a;3,4-a']dinapthalene-4-yl)dimethyl amine; methylphenyl-propyl phosphine; methylsulfone; bicyclo[2.2.1]hepta-2,5-; neuraminic acid; N-acetyl-neuraminic acid; N-glycolyl-neuraminic acid; 2,3-bis(diphenylphosphino)-bicyclo[2.2.1]hept-5-ene; nitrilo-triacetic acid; ornithine; succinate; oxalate; phenyl o-anisylmethyl phosphine; phthalo cyanine; phenyl alanine; phenanthroline; picolyl amine; piperidine; para-nitro-benzoic acid; porphyrin; proline; pyridyl; PYBOX; pyroglutamate ; pyrazine; ribose; sarcosine; salene; serine; succinyl; 1,4,7-triazacyclononane; tert-butyl-di-methyl-silyl; tartrate; terpyridine; thymidine; threonine; thymine; tetramethylethylene diamine; trimesic acid; tris(pyrazolyl)borate; triphenyl phosphane; tryptophane; tyrosine; tetrazole; ubiquitin; uracil; uridine; valine.

6. A method according to any of claims 1 to 5, wherein
- defined, carbon containing, organic, saturated or unsaturated, acyclic or cyclic, aliphatic, aromatic or araliphatic residues contain 1 to 30 carbon atoms,
- the residues Rⁱ to R^{l} at the tetra-substituted borate (Va), the residue R^{m} at the organic sulfonate (Vb) and sulphate (Vc), the residue Rⁿ at the carboxylate (Vd), the residues R^{o} to R^{t} at the (fluoroalkyl)fluoro phosphate (Ve), the imides (Vf),(Vg) and (Vh), the residues R^{u} and R^{v} at the organic phosphates (Vi),(Vj) and the organic phosphonates (Vk),(Vl) independently of each other preferably mean:
(C₁-C₃₀)alkyl and the aryl-, heteroaryl-, cycloalkyl-, halogen-, hydroxy-, amino-, carboxy-, formyl-, -O-, -CO-, - CO-O- or -CO-N< substituted components thereof, in particular
methyl, ethyl, 1-propyl, 2-propyl, 1-butyl, 2-butyl, 2-methyl-1-propyl (isobutyl), 2-methyl-2-propyl (tert.-butyl), 1-pentyl, 2-pentyl, 3-pentyl, 2-methyl-1-butyl, 3-methyl-1-butyl, 2-methyl-2-butyl, 3-methyl-2-butyl, 2,2-dimethyl-1-propyl, 1-hexyl, 2-hexyl, 3-hexyl, 2-methyl-1-pentyl, 3-methyl-1-pentyl, 4-methyl-1-pentyl, 2-methyl-2-pentyl, 3-methyl-2-pentyl, 4-methyl-2-pentyl, 2-methyl-3-pentyl, 3-methyl-3-pentyl, 2,2-dimethyl-1-butyl, 2,3-dimethyl-1-butyl, 3,3-dimethyl-1-butyl, 2-ethyl-1-butyl, 2,3-dimethyl-2-butyl, 3,3-dimethyl-2-butyl, heptyl, octyl, nonyl, decyl, undecyl, dodecyl, tridecyl, tetradecyl, pentadecyl, hexadecyl, heptadecyl, octadecyl, nonadecyl, icosyl, henicosyl, docosyl, tricosyl, tetracosyl, pentacosyl, hexacosyl, heptacosyl, octacosyl, nonacosyl, triacontyl, phenylmethyl (benzyl), diphenylmethyl, triphenylmethyl, 2-phenylethyl, 3-phenylpropyl, cyclopentylmethyl, 2-cyclopentylethyl, 3-cyclopentylpropyl, cyclohexylmethyl, 2-cyclohexylethyl, 3-cyclohexylpropyl, methoxy, ethoxy, formyl, acetyl or CₙF_{2(n-a)+(1-b)}H_{2a+b} with n ≤30, 0 ≤ a ≤ n and b = 0 or 1 (for example, CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅);
(C₃-C₁₂)cycloalkyl and the aryl-, heteroaryl-, cycloalkyl-, halogen-, hydroxy-, amino-, carboxy-, formyl-, -O-, -CO- or -CO-O-substituted components thereof, such as, e.g., cyclopentyl, 2-methyl-1-cyclopentyl, 3-methyl-1-cyclopentyl, cyclohexyl, 2-methyl-1-cyclohexyl, 3-methyl-1-cyclohexyl, 4-methyl-1-cyclohexyl or CₙF_{2(n-a)-(1-b)}H_{2a-b} with n ≤30, 0 ≤ a ≤ n and b = 0 or 1;
(C₂-C₃₀)alkenyl and the aryl-, heteroaryl-, cycloalkyl-, halogen-, hydroxy-, amino-, carboxy-, formyl-, -O-, -CO- or -CO-O-substituted components thereof, in particular 2-propenyl, 3-butenyl, cis-2-butenyl, trans-2-butenyl or CₙF_{2(n-a)-(1-b)}H_{2a-b} with n ≤30, 0 ≤ a ≤ n and b = 0 or 1;
(C₃-C₁₂)cycloalkenyl and the aryl-, heteroaryl-, cycloalkyl-, halogen-, hydroxy-, amino-, carboxy-, formyl-, -O-, -CO- or -CO-O-substituted components thereof, in particular 3-cyclopentenyl, 2-cyclohexenyl, 3-cyclohexenyl, 2,5-cyclohexadienyl or CₙF_{2(n-a)-3(i-b)}H_{2a-3b} with n ≤30, 0 ≤ a ≤ n and b = 0 or 1;
aryl or saturated or unsaturated heterocyclyl, in particular heteroaryl having 2 to 30 carbon atoms and the alkyl-, aryl-, heteroaryl-, cycloalkyl-, halogen-, hydroxy-, amino-, carboxy-, formyl-, -O-, -CO- or -CO-O-substituted components thereof,
in particular
phenyl, 2-methyl-phenyl (2-tolyl), 3-methyl-phenyl (3-tolyl), 4-methyl-phenyl, 2-ethyl-phenyl, 3-ethyl-phenyl, 4-ethyl-phenyl, 2,3-dimethyl-phenyl, 2,4-dimethyl-phenyl, 2,5-dimethyl-phenyl, 2,6-dimethyl-phenyl, 3,4-dimethyl-phenyl, 3,5-dimethyl-phenyl, 4-phenyl-phenyl, 1-naphthyl, 2-naphthyl, 1-pyrrolyl, 2-pyrrolyl, 3-pyrrolyl, 2-pyridinyl, 3-pyridinyl, 4-pyridinyl or C₆F₍₅₋ₐ₎Hₐ with 0 ≤a ≤5.

7. A method according to any of claims 1 to 6, **characterized in that** 5 - 95 wt.% metal salts [M]ₓ^{b+}[B]_{y}^{a-} have been added to the ionic liquids, wherein a,b,x,y independently of each other mean the integers 1,2,3 or 4 and wherein the product of x and b equals the product of y and a,
wherein in particular the metal cations are selected from Cr⁺², Cr⁺³, Co⁺², Co⁺³, Cu⁺¹, Cu⁺², Fe⁺², Fe⁺³, Mn⁺², Mn⁺³,Ni⁺², Ni⁺³, Ti⁺², Ti⁺³, Li⁺, Na⁺, K⁺, Cs⁺, Mg²⁺, Ca²⁺, Ba², Sr²⁺, Zr⁴⁺, Sn²⁺, Sn⁴⁺, Ag⁺, Zn²⁺ and Al³⁺, especially preferred ones being Co⁺², Co⁺³, Cu⁺¹, Cu⁺², Fe⁺², Fe⁺³, Mn⁺², Mn⁺³, Ti⁺², Ti⁺³, Li⁺, Na⁺, K⁺, Mg²⁺, Ca²⁺, Zn²⁺ and Al³⁺.

## Revendications

1. Procédé de durcissement d'une composition adhésive polymère en utilisant des micro-ondes, **caractérisé en ce que** la composition adhésive contient un liquide ionique [A]⁺ₐ[B]^{a-}, dans lequel [A]⁺ désigne un cation, [B]^{a-} désigne un anion et a designe un nombre entier.

2. Procédé selon la revendication 1, **caractérisé en ce que** [A]⁺ désigne un cation ammonium [R^{1'}R¹R²R³N]⁺, un cation phosphonium [R^{1'}R¹R²R³P]⁺, un cation sulfonium [R^{1'}R¹R²S]⁺, un cation hétéro-aromatique ou un cation guanidinium R³R^{3'}N(C=NR¹R^{1'})NR²R2^{'} de formule 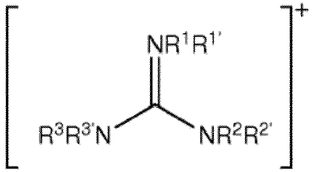
dans lequel R¹, R^{1'}, R², R^{2'} et R³, R^{3'} désignent un atome d'hydrogène ou des radicaux organiques, par exemple, désignent respectivement indépendamment les uns des autres un atome d'hydrogène, ou un groupe alkyle non substitué, alcényle, alcinyle, cycloalkyle, cycloalcényle, aryle ou un groupe hétérocyclyle saturé ou insaturé comme par exemple un groupe hétéroaryle, dans lequel les 7 radicaux cités en dernier lieu peuvent être non substitués ou substitués respectivement indépendamment les uns des autres par un ou plusieurs halogènes et/ou 1 à 3 radicaux choisis parmi les groupes alkyle (en C₁ à C₆), aryle, hétérocyclyle saturé ou insaturé, tel que hétéroaryle, cycloalkyle (en C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels
R^{c} et R^{d} désignent indépendamment les uns des autres un atome d'hydrogène, un groupe alkyle (en C₁ à C₆), halogéno-alkyle (en C₁ à C₆), cycloalkyle, en particulier cyclopentyle, cyclohexyle, phényle, tolyle ou benzyle ; ou deux des radicaux R¹, R^{1'}, R², R^{2'}, R³, R^{3'} forment conjointement avec l'hétéroatome auquel ils sont liés, un cycle saturé ou insaturé qui est non substitué ou substitué, et
dans lesquels chaque chaîne de carbone peut être interrompue par un ou plusieurs hétéroatomes choisis dans le groupe constitué de O, S, NH ou N-alkyle (en C₁ à C₄).

3. Procédé selon la revendication 2, **caractérisé en ce que** le radical hétérocyclyle est non saturé et est choisi en particulier parmi un composé hétéroaromatique de 5 ou 6 chaînons qui présente au moins un atome d'azote ainsi que, éventuellement un atome d'oxygène ou de soufre, et qui est non substitué ou substitué et/ou annexé, en particulier qui est choisi dans le groupe de formule 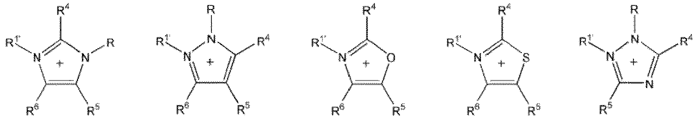 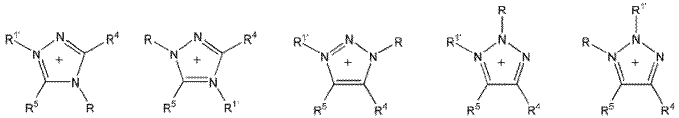 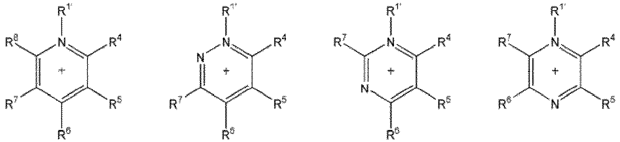 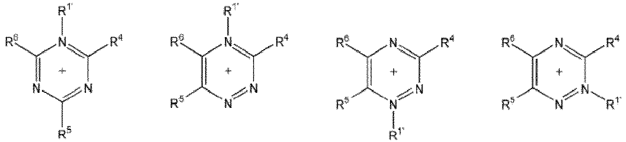 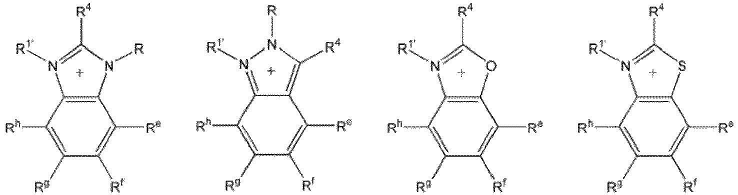 dans laquelle
R, R^{1'} sont indépendamment l'un de l'autre, un atome d'hydrogène, un groupe alkyle (en C₁ à C₃₀), cycloalkyle (en C₃ à C₁₂), alcényle (en C₂ à C₃₀), cycloalcényle (en C₃ à C₁₂), aryle ou hétérocyclyle saturé ou insaturé, en particulier hétéroaryle, dans lequel les 6 radicaux cités en dernier lieu sont non substitués respectivement indépendamment les uns des autres, ou substitués par un ou plusieurs radicaux halogène, et/ou 1 à 3 radicaux choisis dans le groupe alkyle (en C₁ à C₃₀), aryle, hétérocyclyle saturé ou insaturé, en particulier hétéroaryle, cycloalkyle (en C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels
R^{c} et R^{d} désignent indépendamment les uns des autres un atome d'hydrogène, un groupe alkyle (en C₁ à C₆), halogéno-alkyle (en C₁ à C₆), cycloalkyle, en particulier cyclopentyle, cyclohexyle, phényle, tolyle ou benzyle ; R⁴, R⁵, R⁶, R⁷, R⁸ représentent indépendamment les uns des autres un atome d'hydrogène, d'halogène, un groupe nitro, cyano, OR^{c}, SR^{c}, NR^{c}R^{d}, COR^{c}, COOR^{c}, CO-NR^{c}R^{d}, alkyle (en C₁ à C₃₀), cycloalkyle (en C₃ à C₁₂), alcényle (en C₂ à C₃₀), cycloalcényle (en C₃ à C₁₂), aryle ou hétérocyclyle saturé ou insaturé, en particulier hétéroaryle, dans lequel les 6 radicaux cités en dernier lieu, sont respectivement, indépendamment les uns des autres, non substitués, ou substitués par un ou plusieurs atomes d'halogène et/ou 1 à 3 radicaux choisis dans le groupe alkyle (en C₁ à C₆), aryle, hétérocyclyle saturé ou insaturé, en particulier hétéroaryle, cycloalkyle en (C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels R^{c} et R^{d} désignent indépendamment l'un de l'autre un atome d'hydrogène,
un groupe alkyle (en C₁ à C₆), halogéno-alkyle (en C₁ à C₆), cycloalkyle, en particulier cyclopentyle, cyclohexyle, phényle, tolyle ou benzyle ; ou deux des radicaux R, R⁴, R⁵, R⁶, R⁷, R⁸ qui sont voisins, forment conjointement avec l'atome auquel ils sont liés, un cycle, dans lequel celui-ci peut être insaturé ou saturé, en particulier aromatique, non substitué ou substitué, et
dans lesquels les chaînes de carbone formées par les radicaux concernés peuvent être interrompues par un ou plusieurs hétéroatomes choisis dans le groupe constitué de O, S, N, NH ou N-alkyle (en C₁ à C₄) ;
R^{e}, R^{f}, R^{g}, R^{h} représentent indépendamment les uns des autres un atome d'hydrogène, des radicaux alkyle, alcényle, alcinyle, cycloalkyle, cycloalcényle, aryle ou hétéroaryle, dans lequel les 7 radicaux cités en dernier lieu peuvent porter indépendamment les uns des autres un ou plusieurs radicaux halogène et/ou 1 à 3 radicaux choisis dans le groupe alkyle (en C₁ à C₆), aryle, hétéroaryle, cycloalkyle (en C₃ à C₇), halogène, OR^{c}, SR^{c}, NR^{c}R^{d}, COR^{d}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels R^{c} et R^{d} représentent indépendamment les uns des autres un atome d'hydrogène, un groupe alkyle (en C₁ à C₆), halogéno-alkyle (en C₁ à C₆), cycloalkyle, en particulier cyclopentyle, cyclohexyle, phényle, tolyle ou benzyle.

4. Procédé selon l'une des revendications 1 à 3, dans lequel [B]^{a-} est choisi parmi :
- un fluorure, chlorure, bromure, iodure, dicyanamide, thiocyanate ; perchlorate, hexafluorophosphate, nitrite, nitrate, sulfate, hydrogénosulfate, carbonate, hydrogénocarbonate, alkylcarbonate, méthylcarbonate, arylcarbonate ; phosphate ; hydrogénophosphate ; dihydrogénophosohate ; sulfamate H₂N-SO₃⁻, acésulfame déprotoné (6-méthyl-2,2-dioxo-oxathiazin-4-olate), saccharine déprotonée (1,1-dioxo-3-one-1,2-benzothiazolate), cyclamate (acide de cyclohexane-sulfamide déprotoné),
- un borate tétra-substitué de formule générale (Va) [BRⁱR^{j}R^{k}R^{l}], dans lequel Rⁱ à R^{l} représentent indépendamment les uns des autres un fluor ou un groupe alkyle (en C₁ à C₃₀), cycloalkyle (en C₃ à C₁₂), alcényle (en C₂ à C₃₀), cycloalcényle (en C₃ à C₁₂), aryle ou hétérocycle saturé ou insaturé, en particulier hétéroaryle, dans lequel les 6 radicaux cités en dernier lieu sont respectivement, indépendamment les uns des autres, non substitués ou substitués par un ou plusieurs atomes d'halogène et/ou 1 à 3 radicaux choisis dans le groupe alkyle (en C₁ à C₃₀), aryle, hétérocyclyle saturé ou insaturé, en particulier hétéroaryle, cycloalkyle (en C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels R^{c} et R^{d} désignent indépendamment les uns des autres un atome d'hydrogène, un groupe alkyle (en C₁ à C₆), halogéno-alkyle (en C₁ à C₆), cycloalkyle, en particulier cyclopentyle, cyclohexyle, phényle, tolyle ou benzyle ; ou
deux des radicaux Rⁱ à R^{l} forment conjointement avec l'atome de bore auquel ils sont liés, un cycle de cinq, six ou sept chaînons, dans lequel celui-ci peut être saturé ou insaturé, non substitué ou substitué, et dans lesquels les chaînes de carbone formées par les radicaux concernés peuvent être interrompues par un ou plusieurs hétéroatomes choisis dans le groupe constitué de O, S, N, NH ou N-alkyle (en C₁ à C₄),
ou
- un sulfonate organique de formule générale (Vb) [R^{m}-SO₃]⁻ ou un sulfate organique de formule générale (Vc) [R^{m}-OSO₃]⁻, dans laquelle
R^{m} désigne un groupe alkyle (en C₁ à C₃₀), cycloalkyle (en C₃ à C₁₂), alcényle (en C₂ à C₃₀), cycloalcényle (en C₃ à C₁₂), aryle ou hétérocyclyle saturé ou insaturé, en particulier hétéroaryle, dans lequel les 6 radicaux cités en dernier lieu sont respectivement, indépendamment les uns des autres, non substitués ou substitués par un ou plusieurs halogènes, et/ou
1 à 3 radicaux choisis dans le groupe alkyle (en C₁ à C₃₀), aryle, hétérocyclyle saturé ou insaturé, en particulier hétéroaryle, cycloalkyle (en C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels
R^{c} et R^{d} désignent indépendamment l'un de l'autre un atome d'hydrogène, un groupe alkyle (en C₁ à C₆), halogéno-alkyle (en C₁ à C₆), cycloalkyle, en particulier cyclopentyle, cyclohexyle, phényle, tolyle ou benzyle ;
- un carboxylate de formule générale (Vd) [Rⁿ-COO]⁻, dans laquelle
Rⁿ désigne un atome d'hydrogène ou un groupe alkyle (en C₁ à C₃₀), cycloalkyle (en C₃ à C₁₂), alcényle (en C₂ à C₃₀), cycloalcényle (en C₃ à C₁₂), aryle ou hétérocyclyle saturé ou insaturé, en particulier hétéroaryle, dans lequel les 6 radicaux cités en dernier lieu sont respectivement, indépendamment les uns des autres, non substitués ou substitués par
un ou plusieurs halogènes, et/ou
1 à 3 radicaux choisis dans le groupe alkyle (en C₁ à C₃₀), aryle, hétérocyclyle saturé ou insaturé, en particulier hétéroaryle, cycloalkyle en (C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels
R^{c} et R^{d} désignent indépendamment l'un de l'autre un atome d'hydrogène, un groupe alkyle (en C₁ à C₆), halogéno-alkyle (en C₁ à C₆), cycloalkyle, en particulier cyclopentyle, cyclohexyle, phényle, tolyle ou benzyle ;
ou
- un carboxylate qui est issu, au niveau de sa formule, par déprotonation d'un ou éventuellement également plusieurs groupes d'acide carboxylique d'acides de fruit, d'acides sacchariques, d'acides aminés, d'acides gras, d'acides volatils et d'acides résiniques ou qui est conjugué à ces acides ;
- un fluorophosphate (de fluoroalkyle) de formule générale (Ve) [PFₓ(C_{y}F_{2y+1-z}H_{z})₆₋ₓ]⁻,
dans laquelle 1 ≤ x ≤ 6, 1 ≤ y ≤ 8 et 0 ≤ z ≤ 2y + 1 ; ou
- un imide de formule générale (Vf) [R^{o}-SO₂-N-SO₂-R^{p}]⁻, (Vg) [R^{q}-SO₂-N-CO-R^{r}]⁻ ou (Vh) [R^{s}-CO-N-CO-R^{t}]⁻, dans laquelle R^{o} à R^{t} désignent indépendamment les uns des autres, un atome d'hydrogène ou un groupe alkyle (en C₁ à C₃₀), cycloalkyle (en C₃ à C₁₂), alcényle (en C₂ à C₃₀), cycloalcényle (en C₃ à C₁₂), aryle ou hétérocyclyle saturé ou insaturé, en particulier hétéroaryle, dans lequel les 6 radicaux cités en dernier lieu sont respectivement, indépendamment les uns des autres, non substitués ou substitués par
un ou plusieurs halogènes, et/ou
1 à 3 radicaux choisis dans le groupe alkyle (en C₁ à C₃₀), aryle, hétérocyclyle saturé ou insaturé, en particulier hétéroaryle, cycloalkyle en (C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels
R^{c} et R^{d} désignent indépendamment l'un de l'autre un atome d'hydrogène, un groupe alkyle (en C₁ à C₆), halogéno-alkyle (en C₁ à C₆), cycloalkyle, en particulier cyclopentyle, cyclohexyle, phényle, tolyle ou benzyle ;
ou
- un phosphate organique de formule générale (Vi) [R^{u}-OPO₃]²⁻ ou (Vj) [R^{u}O-PO₂-OR^{v}]⁻ ou un phosphonate organique de formule générale (Vk) [R^{u}-PO₃]²⁻ ou (Vl) [R^{u}-PO₂-OR^{v}]⁻, dans laquelle R^{u} et R^{v} désignent indépendamment l'un de l'autre un atome d'hydrogène ou un groupe alkyle (en C₁ à C₃₀), cycloalkyle (en C₃ à C₁₂), alcényle (en C₂ à C₃₀), cycloalcényke (en C₃ à C₁₂), aryle ou hétéroaryle,
dans lequel les 6 radicaux cités en dernier lieu sont respectivement indépendamment les uns des autres non substitués ou substitués par
un ou plusieurs halogènes, et/ou
1 à 3 radicaux choisis dans le groupe alkyle (en C₁ à C₃₀), aryle, hétérocyclyle saturé ou insaturé, en particulier hétéroaryle, cycloalkyle en (C₃ à C₇), halogène, OR^{c}, SR^{c}, NR^{c}R^{d}, COR^{c}, COOR^{c}, CO-NR^{c}R^{d}, acrylate, méthacrylate, cyanoacrylate, époxyde, vinyle, vinyléther, vinylester, styrène, allyle, phénol, alkylphénol, cétone, amido-amine, urée, uréthane, imidazole, benzimidazole, isocyanate, anhydride d'acide dicarboxylique, résorcine, mélamine, siloxane, alcoxysiloxane, dans lesquels
R^{c} et R^{d} désignent indépendamment l'un de l'autre un atome d'hydrogène, un groupe alkyle (en C₁ à C₆), halogéno-alkyle (en C₁ à C₆), cyclopentyle, cyclohexyle, phényle, tolyle ou benzyle.

5. Procédé selon l'une des revendications 1 à 4, dans lequel l'anion [B]^{a-} représente un complexe d'un atome de métal central M^{+v} de l'indice d'oxydation v = 1, 2, 3, 4, 5 ou 6 et des ligands X⁻, par exemple un complexe de formule générale [M^{+v}Xᵥ₊₁]⁻(Vm) ou [M^{+v}Xᵥ₊₂]²⁻(Vn) ou [M^{+v}Xᵥ₊₃]³⁻(Vo), dans lequel
M+v est choisi parmi les éléments des métaux de transition, en particulier est choisi parmi les éléments Ag, Al, Ce, Cs, Cr, Co, Cu, Dy, Er, Eu, Gd, Ho, Ir, Fe, Mn, Mo, Nd, Ni, Pt, Pr, Re, Rh, Rb, Ru, Sm, Sn, Ta, Tb, Tm, Ti, W, V et Y, en particulier dans les étapes d'oxydation Ag⁺, Al⁺³, Ce⁺², Ce⁺³, Ce⁺⁴, Cs⁺¹, Cr⁺², Cr⁺³, Cr⁺⁶, Co⁺², Co⁺³, Cu⁺¹, Cu⁺², Dy⁺³, Er⁺², Eu⁺³, Eu⁺³, Gd⁺², Gd+3, Ho⁺², Ir⁺⁴, Fe⁺², Fe⁺³, Mn⁺², Mn⁺³, Mo⁺², Mo⁺³, Mo⁺⁴, Mo⁺⁵, Nd⁺², Nd⁺³, Ni⁺², Ni⁺³, Pt⁺⁴, Pr⁺², Pr⁺³, Re⁺⁴, Re⁺⁵, Re⁺⁶, Rh⁺², Rh⁺³, Rb⁺⁴, Ru⁺³, Ru⁺⁴, Sn⁺², Sn⁺⁴, Sm⁺², Sm⁺³, Ta⁺⁵, Tb⁺³, Tm⁺³, Ti⁺², Ti⁺³, W⁺⁴, W⁺⁵, V⁺², V⁺³, V⁺⁴, V⁺⁵, Y⁺² et Y⁺³, dans lequel
chacun des ligands X individuels est choisi indépendamment des autres parmi : fluorure, chlorure, bromure, iodure, thiocyanate, dicyanamide, nitrite ; nitrate ; acétylacétone ; acyle ; adénine ; 2,2'-azobisisobutyronitrile ; alanine ; allyle ; allyloxycarbonyle ; eau ; aryle ; arginine ; asparagine ; aspartate ; BIABN ; biotinyle ; 2,2'-bis(diphényl-phosphino)-6,6'-diméthoxy-1,1'-biphényle ; 2,2'-binaphtyldiphényldiphosphine ; 1,2-bis[4,5-dihydro-3H-binaphto[1,2-c:2',1'-e]phosphépino]benzène ; 1,1'-bis{4,5-dihydro-3H-dinaphto [1,2-c:2',1'-e]phosphépino}ferrocène ; 4,4'-di-tert-butyl-4,4',5,5'-tétrahydro-3,3'-bis-3H-di-naphto[2,1-c:1',2'-e]phosphépine ; BINAL ; 4,5-dihydro-3H-dinaphto [2,1-c:1',2'-e]phosphépine ; 2,2'-binaphtyldiol ; bis-tert-butyl-bipyridine ; benzylméthylphénylphosphine ; benzyle ; tert-butoxycarbonyle ; bis(2-((S)-4-iso-propyl-4,5-dihydro-oxazol-2-yl)phényl)amine ; bis(2-((S)-4-tert-butyl-4,5-dihydro-oxazol-2-yl)phényl)amine ; 1,2-bis(2,5-diéthyl-phospholano)-éthane ; butoxy-carbonyl-4-diphényl-phosphino-2-diphénylphosphino-méthyl-pyrrolidine ; 2,2'-bipyridine ; benzoyle ; benzyloxycarbonyle ; CO ; cycloheptatriényle ; citrulline ; citrate ; cyanure ; cyclo-octadiène ; cyclo-octatétraène ; cyclopentadiényle ; pentaméthylcyclo-pentadiényle ; cyclohexyle ; cytidine ; cystéine ; cytosine ; dibenzilidène-acétone ; O-isopropy-lydène-2,3-dihydroxy-1,4-bis(diphénylphosphino)butane ; (1R,2R)-bis[(2-méthoxyphényl)phényl-phosphino]éthane ; 4-diméthylaminopyridine ; diméthylglyoxime dipivaloyl-méthanate ; périodinane de Dess-Martin ; 1,4,7,10-tétraaza-cyclododécane-1,4-7,10-tétra-acétate ; diphénylphosphényléthane ; diphénylphosphénylméthane ; diphénylphosphénylpropane ; désoxyribose ; diéthylène-triamine-penta-acétate ; bis(2,5-diméthylphospholano)-benzène ; éthylènediamine-tétra-acétate ; éthylènediamine ; fluorénylméthoxycarbonyle ; 7,7-diméthyl-1,1,1,2,2,3,3-heptafluoro-octane-4,6-dionato ; galactose ; galactosamine ; N-acétylgalactosamine, glycolyle ; glucose ; glucosamine, N-acétyl-glucosamine, glutamine, glutamate, glycine, guanine ; guanosine ; hémoglobine ; hexafluoro-acétylacétonate ; histidine ; triamide de l'acide hexaméthylphosphorique ; hydroxyproline ; isoleucine ; leucine ; lysine ; 2,2'-bis[(N,N-diméthylamino)(phényl)méthyl]-1,1'-bisdicyclohexyl-phosphino)ferrocène ; myoglobine ; méthyionine ; methémoglobine ; metmyoglobine ; 3,5-dioxa-4-phospha-cyclohepta[2,1-a ; 3,4-a']dinaphtalén-4-yl)diméthylamine ; méthylphényl-n-propyle-phosphine ; méthylsulfone ; bicyclo[2.2.1]hepta-2,5- ; acide neuraminique ; acide N-acétyl-neuraminique ; acide N-glycolyl-neuraminique ; 2,3-bis(diphénylphosphino)-bicyclo[2.2.1]hept-5-ène ; acide nitrilo-tri-acétique ; ornithine ; succinate ; oxalate ; phényl-o-anisylméthylphosphine ; phtalocyanine ; phénylalanine ; phénanthroline ; picolylamine ; pipéridine ; acide para-nitro-benzoïque ; porphyrine ; proline ; pyridyle ; PYBOX ; pyroglutamae ; pyrazine ; ribose ; sarcosine ; salène ; sérine ; succinyle ; 1,4,7-triazacyclononane ; tert-butyl-diméthyl-silyle ; tartrate ; terpyridine ; thymidine ; thréonine ; thymine ; tétraméthyléthylènediamine ; acide trimésique ; tris(pyrazolyl)borate ; triphénylphosphane ; tryptophane ; tyrosine ; tétrazol ; ubiquitine ; uracile ; uridine ; valine.

6. Procédé selon l'une des revendications 1 à 5, dans lequel
- des radicaux définis, organiques, saturés ou insaturés contenant des atomes de carbone, acycliques ou cycliques, aliphatiques, aromatiques ou araliphatiques comprennent 1 à 30 atomes de carbone
- les radicaux Rⁱ à R^{l} dans le borate tétrasubstitué (Va), le radical R^{m} dans le sulfonate (Vb) et le sulfate (Vc) organiques, le radical Rⁿ dans le carboxylate (Vd), les radicaux R^{o} à R^{t} dans le (fluoroalkyl)fluorophosphate (Ve), dans les imides (Vf), (Vg) et (Vh), les radicaux R^{u} et R^{v} dans les phosphates organiques (Vi), (Vj) et dans les phosphonates organiques (Vk), (Vl) représentent, indépendamment les uns des autres :
un groupe alkyle (en C₁ à C₃₀)et ses composants substitués par un groupe aryle, hétéroaryle, cycloalkyle, halogéno, hydroxy, amino, carboxy, formyle, -O-, -CO-, -CO-O- ou-CO-N<, en particulier les groupes
méthyle, éthyle, 1-propyle, 2-propyle, 1-butyle, 2-butyle, 2-méthyl-1-propyle (isobutyle),
2-méthyl-2-propyle (tert.-butyle), 1-pentyle, 2-pentyle, 3-pentyle, 2-méthyl-1-butyle, 3-méthyl-1-butyle, 2-méthyl-2-butyle, 3-méthyl-2-butyle, 2,2-diméthyl-1-propyle, 1-hexyle, 2-hexyle, 3-hexyle, 2-méthyl-1-pentyle, 3-méthyl-1-pentyle, 4-métyl-1-pentyle, 2-méthyl-2-pentyle, 3-méthyl-2-pentyle, 4-méthyl-2-pentyle, 2-méthyl-3-pentyle, 3-méthyl-3-pentyle, 2,2-diméthyl-1-butyle, 2,3-diméthyl-1-butyle, 3,3-diméthyl-1-butyle, 2-éthyl-1-butyle, 2,3-diméthyl-2-butyle, 3,3-diméthyl-2-butyle, heptyle, octyle, nonyle, décyle, undécyle, dodécyle, tridécyle, tétradécyle, pentadécyle, hexadécyle, heptadécyle, octadécycle, nonadécyle, icosyle, hénicosyle, docosyle, tricosyle, tétracosyle, pentacosyle, hexacosyle, heptacosyle, octacoyle, nonacosyle, triacontyle, phénylméthyle (benzyle), diphénylméthyle, triphénylméthyle, 2-phényléthyle, 3-phénylpropyle, cyclopentylméthyle, 2-cyclopentyléthyle, 3-cyclopentylpropyle, cyclohexylméthyle, 2-cyclohexyléthyle, 3-cyclohexylpropyle, méthoxy, éthoxy, formyle, acétyle ou CₙF_{2(n-a)+(1-b)}H_{2a+b} avec n ≤ 30, 0 ≤ a ≤ n et b = 0 ou 1 (par exemple CF₃, C₂F₅, CH₂CH₂-C₍ₙ₋₂₎F₂₍ₙ₋₂₎₊₁, C₆F₁₃, C₈F₁₇, C₁₀F₂₁, C₁₂F₂₅) ;
cycloalkyle (en C₃ à C₁₂) et ses composants substitués par un groupe aryle, hétéroaryle, cycloalkyle, halogéno, hydroxy, amino, carboxy, formyle, -O-, -CO- ou -CO-O-, comme par exemple les groupes cyclopentyle, 2-méthyl-1-cyclopentyle, 3-méthyl-1-cyclopentyle, cyclohexyle, 2-méthyl-1-cyclohexyle, 3-méthyl-1-cyclohexyle, 4-méthyl-1-cyclohexyle ou CₙF_{2(n-a)+(1-b)}H_{2a-b} avec n ≤ 30, 0 ≤ a ≤ n et b = 0 ou 1 ;
alcényle (en C₂ à C₃₀) et ses composants substitués par un groupe aryle, hétéroaryle, cycloalkyle, halogéno, hydroxy, amino, carboxy, formyle, -O-, -CO- ou -CO-O-, en particulier les groupes 2-propényle, 3-butényle, cis-2-butényle, trans-2-butényle ou CₙF_{2(n-a)+(1-b)}H_{2a-b} avec n ≤ 30, 0 ≤ a ≤ n et b = 0 ou 1 ;
cycloalcényle (en C₃ à C₁₂) et ses composants substitués par un groupe aryle, hétéroaryle, cycloalkyle, halogéno, hydroxy, amino, carboxy, formyle, -O-, -CO- ou -CO-O-, en particulier les groupes 3-cyclopentényle, 2-cyclohexényle, 3-cyclohexnyle, 2, 5-cyclohexadiényle ou CₙF_{2(n-a)-3(1-b)}H_{2a-3b} avec n ≤ 30, 0 ≤ a ≤ n et b = 0 ou 1 ;
aryle ou hétérocyclye saturé ou insaturé, en particulier hétéroaryle avec 2 à 30 atomes de carbone et ses composants substitués par un groupe alkyle, aryle, hétéroaryle, cycloalkyle, halogéno, hydroxy, amino, carboxy, formyle, -O-, -CO- ou -CO-O-, en particulier
phényle, 2-méthyl-phényle (2-tolyle), 3-méthyl-phényle (3-tolyle), 4-méthyl-phényle, 2-éthyl-phényle, 3-éthyl-phényle, 4-éthyl-phényle, 2,3-diméthyl-phényle, 2,4-diméthyl-phényle, 2,5-diméthyl-phényle, 2,6-diméthyl-phényle, 3,4-diméthyl-phényle, 3,5-diméthyl-phényle, 4-phényl-phényle, 1-naphtyle, 2-naphtyle, 1-pyrrolyle, 2-pyrrolyle, 3-pyrrolyle, 2-pyridinyle, 3-pyridinyle, 4-pyridinyle ou C₆F₍₅₋ₐ₎Hₐ avec 0 ≤ a ≤ 5.

7. Procédé selon l'une des revendications 1 à 6, **caractérisé en ce que** l'on ajoute aux liquides ioniques, 5 à 95 % en poids de sels métalliques [M]ₓ^{b+}[B]_{y}^{a-}, dans lequel a, b, x, y indépendamment les uns des autres représentent les nombres 1, 2, 3 ou 4 et dans lequel le produit de x et b égale le produit de y et a,
dans lequel en particulier, les cations métalliques sont choisis parmi Cr⁺², Cr⁺³, Co⁺², Co⁺³, Cu⁺¹, Cu⁺², Fe⁺², Fe⁺³, Mn⁺², Mn⁺³, Ni⁺², Ni⁺³, Ti⁺², Ti⁺³, Li⁺, Na⁺, K⁺, Cs⁺, Mg²⁺, Ca²⁺, Ba², Sr²⁺, Zr⁴⁺, Sn²⁺, Sn⁴⁺, Ag⁺, Zn²⁺ et Al³⁺, plus particulièrement, Co⁺², Co⁺³, Cu⁺¹, Cu⁺², Fe⁺², Fe⁺³, Mn⁺², Mn⁺³, Ti⁺², Ti⁺³, Li⁺, Na⁺, K⁺, Mg²⁺, Ca²⁺, Zn²⁺ et Al³⁺.
